# EUROPEAN PATENT APPLICATION

(11) **EP 4 604 239 A1**
(43) Date of publication of application: **20.08.2025**
(21) Application number: 23891320.6
(22) Date of filing: 26.10.2023
(51) Int. Cl.: H01M 10/052, H01M 4/587, H01M 10/0567, H01M 10/0568, H01M 10/0569

(54) **NONAQUEOUS ELECTROLYTE SECONDARY BATTERY**

(30) Priority: 16.11.2022 JP 2022183482
(71) Applicant: Nippon Shokubai Co., Ltd., Osaka-shi, Osaka 541-0043 (JP)
(72) Inventor: MIZUNO, Hiroyuki, Suita-shi, Osaka 564-0034 (JP); ITO, Hirokazu, Suita-shi, Osaka 564-0034 (JP); KITANO, Tomoyuki, Suita-shi, Osaka 564-0034 (JP)
(74) Representative: Germain Maureau
(86) International application number: PCT/JP2023/038688
(87) International publication number: WO 2024/106165

(57) **Abstract**

Provided is a non-aqueous electrolyte secondary battery provided with: a non-aqueous electrolytic liquid containing a sulfonylimide compound represented by General Formula (1) as an electrolyte salt and a carbonate-based solvent as an electrolyte solvent; a negative electrode containing, as a negative electrode active material, graphite having a peak area ratio (D/G ratio) of a D-band and a G-band analyzed by Raman spectroscopy of 0.7 or less, or graphite having a full-width at half-maximum of the G-band analyzed by Raman spectroscopy of 28 cm⁻¹ or less; and a positive electrode. (1): LiN(RSO₂)(FSO₂) (where R represents a fluorine atom, an alkyl group having 1-6 carbon atoms, or a fluoroalkyl group having 1-6 carbon atoms)

## Description

### Technical Field

The present disclosure relates to a non-aqueous electrolyte secondary battery.

### Background Art

In order to improve battery performance of a secondary battery such as a lithium-ion secondary battery, vario studies have been conducted on non-aqueous electrolytic liquids used in secondary batteries and on the materials thereof. Through previously conducted examinations, the inventors of the present application discovered that a non-aqueous electrolytic liquid containing a sulfonylimide compound such as lithium bis(fluorosulfonyl)imide as an electrolyte salt improves battery performance such as high-temperature durability and charge/discharge cycle characteristics of a lithium-ion secondary battery.

As a result of further examinations, the present inventors discovered that a battery that uses a non-aqueous electrolytic liquid containing a sulfonylimide compound self-discharges significantly from a fully charged state during battery storage in comparison to a battery that uses a non-aqueous electrolytic liquid containing only a lithium compound other than a sulfonylimide compound (such as, for example, LiPF₆, and LiBF₄) as an electrolyte salt, and thus there is room for improvement in battery storage characteristics. Therefore, the present inventors have proposed various techniques for improving battery storage characteristics (for example, see Patent Document 1).

In addition, the present inventors have also proposed, as a secondary battery provided with a non-aqueous electrolytic liquid, a non-aqueous electrolyte secondary battery including, as constituent materials, a non-aqueous electrolytic liquid containing a sulfonylimide compound and a sulfone compound, and a negative electrode containing a specific carbon material (Patent Document 2).

Patent Documents 3 to 6 propose, as a non-aqueous electrolytic liquid constituting a secondary battery, for example, a non-aqueous electrolytic liquid containing an additive such as trimethylsilyl polyphosphate.

### Citation List

### Patent Documents

Patent Document 1: WO 2022/065198
Patent Document 2: JP 6646522 B
Patent Document 3: JP 2016-91785 A
Patent Document 4: JP 2016-192401 A
Patent Document 5: KR 2017-0000903 A
Patent Document 6: WO 2016/209840

### Summary of Invention

### Technical Problem

Patent Document 1 indicates that CO₂ or the like is dissolved in a non-aqueous electrolytic liquid containing a sulfonylimide compound, and thereby self-discharge of a battery using the non-aqueous electrolytic liquid is suppressed. However, the crystallinity of graphite used as a negative electrode active material is not examined or described.

In Patent Document 2, the self-discharge of a battery that uses a non-aqueous electrolytic liquid containing a sulfonylimide compound is not examined or described. In the non-aqueous electrolyte secondary battery of Patent Document 2, the discharge capacity is improved by combining a negative electrode containing a specific carbon material as a negative electrode active material and a non-aqueous electrolytic liquid containing, as an essential component, a sulfone compound such as sulfolane as an electrolyte solvent. However, when a sulfone compound is used, low-temperature characteristics (for example, the discharge capacity at 0°C (hereinafter, also referred to as "low-temperature discharge capacity")) are not sufficient, and thus there is room for improvement.

In Patent Documents 3 to 6, as the configurations of the secondary batteries described therein, there is no detailed description relating to a negative electrode or a non-aqueous electrolytic liquid containing a sulfonylimide compound, and the crystallinity of graphite used as a negative electrode active material is not examined.

The present disclosure was developed in view of the foregoing, and an object of the present disclosure is to provide a non-aqueous electrolyte secondary battery provided with a non-aqueous electrolytic liquid containing a sulfonylimide compound, in which self-discharge is suppressed (storage characteristics are improved) and low-temperature discharge capacity is improved (low-temperature characteristics are improved) by combining a non-aqueous electrolytic liquid that contains a carbonate-based solvent with a negative electrode that contains specific graphite as a negative electrode active material.

### Solution to Problem

In order to achieve the above object, the technique in the present disclosure aims to improve low-temperature discharge capacity of a non-aqueous electrolyte secondary battery containing a sulfonylimide compound by using a carbonate-based solvent, and to suppress self-discharge by using a specific carbon material (graphite) without dissolving CO₂ or the like in the non-aqueous electrolytic liquid. Specifically, the present disclosure is as follows.

A non-aqueous electrolyte secondary battery of the present disclosure is characterized by being provided with: a non-aqueous electrolytic liquid containing, as an electrolyte salt, a sulfonylimide compound represented by General Formula (1):

LiN(RSO₂)(FSO₂) (1)

where R represents a fluorine atom, an alkyl group having 1-6 carbon atoms, or a fluoroalkyl group having 1-6 carbon atoms,
and a carbonate-based solvent as an electrolyte solvent; a negative electrode containing, as a negative electrode active material, graphite having a peak area ratio (D/G ratio) of a D-band and a G-band analyzed by Raman spectroscopy of 0.7 or less; and a positive electrode.

Moreover, a non-aqueous electrolyte secondary battery of the present disclosure is characterized by being provided with: the above-described non-aqueous electrolytic liquid; a negative electrode containing, as a negative electrode active material, graphite having a full-width at half-maximum of the G-band analyzed by Raman spectroscopy of 28 cm⁻¹ or less; and a positive electrode.

In the non-aqueous electrolyte secondary battery of the present disclosure, the sulfonylimide compound represented by General Formula (1) may be contained at an amount of 0.2 mol/L or more relative to the non-aqueous electrolytic liquid, and may include LiN(FSO₂)₂. The carbonate-based solvent may be included at an amount of 50 mass% or more per 100 mass% of the total amount of the electrolyte solvent, and may include at least one selected from the group consisting of a chain carbonate-based solvent and a saturated cyclic carbonate-based solvent. The non-aqueous electrolytic liquid may contain, as an additive, a phosphorus atom-containing compound represented by General Formula (4):

(4): [-P(=O)(OR¹)O-]ₙ

(in General Formula (4), R¹ represents an alkyl group having 1-6 carbon atoms (which may have a substituent), a fluoroalkyl group having 1-6 carbon atoms (which may have a substituent), an aryl group (which may have a substituent), a silyl group (which may have a substituent), an alkali metal atom, an onium salt, or a hydrogen atom, and n is 2 or greater)
or may contain, as an additive, at least one selected from the group consisting of trimethylsilyl polyphosphate, ethyl polyphosphate, (triisopropylsilyl) polyphosphate, and [(tert-butyl) dimethylsilyl] polyphosphate. The positive electrode may contain a positive electrode active material represented by General Formula (5):

   (5): LiᵥNiₓCo_{y}Mn_{z}O_{2+w} (0.2 ≤ v ≤ 1.2, 0.5 ≤ x ≤ 0.9, 0 ≤ y ≤ 0.3, 0 ≤ z ≤ 0.4, x + y + z = 1, -0.2 ≤ w ≤ 0.2
(where v represents a molar ratio of Li, x represents a molar ratio of Ni, y represents a molar ratio of Co, z represents a molar ratio of Mn, and w (2 + w) represents a molar ratio of O)). The electrolyte salt may include at least one selected from the group consisting of a compound represented by General Formula (2):

   LiPFₐ(CₘF₂ₘ₊₁)₆₋ₐ (2)
where a: 0 ≤ a ≤ 6, m: 1 ≤ m ≤ 4,
a compound represented by General Formula (3):

   LiBF₆(CₙF₂ₙ₊₁)_{4-b} (3)
where b: 0 ≤ b ≤ 4, n: 1 ≤ n ≤ 4,
and LiAsF₆.

### Advantageous Effects of Invention

In a non-aqueous electrolyte secondary battery provided with a non-aqueous electrolytic liquid containing a sulfonylimide compound according to the present disclosure, self-discharge can be suppressed (storage characteristics can be improved) and low-temperature discharge capacity can be improved (low-temperature characteristics can be improved) by combining a non-aqueous electrolytic liquid containing a carbonate-based solvent with a negative electrode containing specific graphite as a negative electrode active material.

### Brief Description of Drawings

FIG. 1 is a D/G chart (Raman spectrum) of graphite "MAGE" used in a production example.
FIG. 2 is a D/G chart of graphite "SFG15" used in a production example.
FIG. 3 is a D/G chart of graphite "SLP50" used in a production example.
FIG. 4 is a D/G chart of graphite "O-MAC" used in a production example.
FIG. 5 is a D/G chart of graphite "SMG" used in a production example.
FIG. 6 is a graph showing a ³¹P-NMR spectrum of a reagent trimethylsilyl polyphosphate (PPSE-1) used in Example 4 series and Example 5 series.
FIG. 7 is a graph showing a ³¹P-NMR spectrum of trimethylsilyl polyphosphate (PPSE-2) synthesized in the Example 4 series and the Example 5 series.
FIG. 8 is a graph showing a ³¹P-NMR spectrum of trimethylsilyl polyphosphate (PPSE-3) synthesized in the Example 4 series and the Example 5 series.

### Description of Embodiments

Hereinafter, a present embodiment will be described in detail. The following description of a preferred embodiment is merely exemplary in nature and is in no way intended to limit the present invention, its application, or uses thereof.

### Non-Aqueous Electrolyte Secondary Battery

The term non-aqueous electrolyte secondary battery according to the present embodiment refers to a secondary battery provided with a non-aqueous electrolytic liquid. The non-aqueous electrolyte secondary battery includes a non-aqueous electrolytic liquid, a positive electrode, and a negative electrode.

### Non-Aqueous Electrolytic liquid

The non-aqueous electrolytic liquid contains an electrolyte salt and an electrolyte solvent.

### Electrolyte Salt

The electrolyte salt includes a sulfonylimide compound (a fluorine-containing sulfonylimide salt referred to hereinafter as a "sulfonylimide compound (1)") represented by General Formula (1).
[Formula 1]

LiN(RSO₂)(FSO₂) (1)

That is, the non-aqueous electrolyte secondary battery according to the present embodiment includes, as one constituent material, a non-aqueous electrolytic liquid containing, as an electrolyte salt, the sulfonylimide compound (1) as an essential component.

In General Formula (1), R represents a fluorine atom, an alkyl group having 1-6 carbon atoms, or a fluoroalkyl group having 1-6 carbon atoms.

Examples of the alkyl group having 1-6 carbon atoms include a methyl group, an ethyl group, a propyl group, an isopropyl group, a butyl group, a pentyl group, and a hexyl group. Among the alkyl groups having 1-6 carbon atoms, a linear or branched alkyl group having 1 to 6 carbon atoms is preferable, and a linear alkyl group having 1 to 6 carbon atoms is more preferable.

Examples of the fluoroalkyl group having 1-6 carbon atoms include an alkyl group having 1-6 carbon atoms with some or all of its hydrogen atoms substituted with fluorine atoms. Examples of the fluoroalkyl group having 1-6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

As the substituent R, a fluorine atom and a perfluoroalkyl group (for example, a perfluoroalkyl group having 1-6 carbon atoms such as a trifluoromethyl group, a pentafluoroethyl group, and a heptafluoropropyl group) are preferable, a fluorine atom, a trifluoromethyl group, and a pentafluoroethyl group are more preferable, a fluorine atom and a trifluoromethyl group are still more preferable, and a fluorine atom is yet even more preferable.

Specific examples of the sulfonylimide compound (1) include lithium bis(fluorosulfonyl)imide (LiN(FSO₂)₂, LiFSI), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium (fluorosulfonyl)(pentafluoroethylsulfonyl)imide, and lithium (fluorosulfonyl)(heptafluoropropylsulfonyl)imide. A single type of the sulfonylimide compound may be used alone, or two or more types thereof may be used in combination. As the sulfonylimide compound (1), a commercially available product may be used, or a compound obtained by synthesis through a known method may be used.

Among the sulfonylimide compounds (1), from the viewpoint of improving battery performance, LiN(FSO₂)₂, lithium (fluorosulfonyl) (trifluoromethylsulfonyl)imide, and lithium (fluorosulfonyl) (pentafluoroethylsulfonyl)imide are preferable, and LiN(FSO₂)₂ is more preferable. In other words, in the non-aqueous electrolytic liquid, LiN(FSO₂)₂ is preferably included as the sulfonylimide compound (1).

From the viewpoint of improving battery performance, a concentration (a content, or a total content when two or more compounds are used in combination) of the sulfonylimide compound (1) in the non-aqueous electrolytic liquid is preferably 0.01 mol/L or more, more preferably 0.05 mol/L or more, still more preferably 0.1 mol/L or more, further preferably 0.2 mol/L or more, and still further preferably 0.5 mol/L or more. In addition, from the viewpoint of suppressing a decrease in battery performance due to an increase in viscosity of the electrolytic liquid and suppressing self-discharge of the battery, the concentration of the sulfonylimide compound (1) in the non-aqueous electrolytic liquid is preferably 5 mol/L or less, more preferably 3 mol/L or less, and still more preferably 2 mol/L or less.

From the viewpoint of improving battery performance, the content of the sulfonylimide compound (1) in the non-aqueous electrolytic liquid is preferably 10 mol% or more, more preferably 20 mol% or more, still further preferably 30 mol% or more, and yet even further preferably 50 mol% or more, in a total of 100 mol% of the electrolyte salt contained in the non-aqueous electrolytic liquid.

From the viewpoint of improving battery performance, the content of the sulfonylimide compound (1) in the non-aqueous electrolytic liquid is preferably 1 mass% or more, more preferably 3 mass% or more, and still more preferably 5 mass% or more relative to the entire non-aqueous electrolytic liquid (relative to 100 mass% of a total amount of components contained in the non-aqueous electrolytic liquid). In addition, from the viewpoint of suppressing a decrease in battery performance due to an increase in the viscosity of the electrolytic liquid, the content is preferably 70 mass% or less, more preferably 50 mass% or less, further preferably 30 mass% or less, and still further preferably 20 mass% or less relative to 100 mass% of the total amount of the components contained in the non-aqueous electrolytic liquid.

The electrolyte salt (lithium salt) may only include the sulfonylimide compound (1), but may include another electrolyte salt (an electrolyte salt other than the sulfonylimide compound (1)). Examples of the other electrolyte salt include imide salts and non-imide salts.

Examples of the imide salt include another fluorine-containing sulfonylimide salt (hereinafter, referred to as "the other sulfonylimide compound") different from the sulfonylimide compound (1). Examples of the other sulfonylimide compound include a non-lithium salt of the fluorine-containing sulfonylimides exemplified as the sulfonylimide compound (1) (for example, a salt in which the lithium (ion) in the sulfonylimide compound (1) is substituted with a cation other than a lithium ion). Examples of the salt substituted with a cation other than a lithium ion include an alkali metal salt such as a sodium salt, a potassium salt, a rubidium salt, and a cesium salt; an alkaline earth metal salt such as a beryllium salt, a magnesium salt, a calcium salt, a strontium salt, and a barium salt; an aluminum salt; an ammonium salt; and a phosphonium salt. A single type of the other sulfonylimide compound may be used alone, or two or more types thereof may be used in combination. Moreover, as the other sulfonylimide compound, a commercially available product may be used, or a compound obtained by synthesis through a known method may be used.

Examples of the non-imide salt include a salt of a non-imide anion and a cation (a lithium ion and a cation exemplified above). Examples of the non-imide salt include a lithium salt such as a compound represented by General Formula (2):
[Formula 2]

LiPFₐ(CₘF₂ₘ₊₁)₆₋ₐ (2)

where a: 0 ≤ a ≤ 6, m: 1 ≤ m ≤ 4,
(hereinafter, such a compound is referred to as "fluorophosphate compound (2)"), a compound represented by General Formula (3):
   [Formula 3]

   LiBFu(CₙF₂ₙ₊₁)_{4-b} (3)
where b: 0 ≤ b ≤ 4, n: 1 ≤ n ≤ 4,
(hereinafter, such a compound is referred to as "fluoroborate compound (3)"), lithium hexafluoroarsenate (LiAsF₆), LiSbF₆, LiClO₄, LiSCN, LiAlF₄, CF₃SO₃Li, LiC[(CF₃SO₂)]₃], LiN(NO₂), and LiN[(CN)₂]; and a non-lithium salt (for example, a salt in which the lithium (ion) in any of the lithium salt is substituted with a cation exemplified above (for example, NaBF₄, NaPF₆, and NaPF₃(CF₃)₃). A single type of the non-imide salt may be used alone, or two or more types thereof may be used in combination. Moreover, as the non-imide salt, a commercially available product may be used, or a non-imide salt obtained by synthesis through a known method may be used.

Among the other electrolytes, a non-imide salt is preferable from the viewpoints of ion conductivity and cost, and a fluorophosphate compound (2), a fluoroborate compound (3), and LiAsF₆ are preferable, and a fluorophosphate compound (2) is more preferable.

Examples of the fluorophosphate compound (2) include LiPF₆, LiPF₃(CF₃)₃, LiPF₃(C₂F₅)₃, LiPF₃(C₃F₇)₃, and LiPF₃(C₄F₉)₃. Among the fluorophosphate compounds (2), LiPF₆ and LiPF₃(C₂F₅)₃ are preferable, and LiPF₆ is more preferable.

Examples of the fluoroborate compound (3) include LiBF₄, LiBF(CF₃)₃, LiBF(C₂F₅)₃, and LiBF(C₃F₇)₃. Among the fluoroborate compounds (3), LiBF₄ and LiBF(CF₃)₃ are preferable, and LiBF₄ is more preferable.

Note that these electrolyte salts (the sulfonylimide compound (1), the other electrolyte salt, and the like) may be present (contained) as ions in the non-aqueous electrolytic liquid.

As a salt composition of the electrolyte, the electrolyte salt may have a single salt composition of the sulfonylimide compound (1), or have a mixed salt composition including the sulfonylimide compound (1) and another electrolyte. When an electrolyte salt having a mixed salt composition is used, an electrolyte salt having a mixed salt composition including the sulfonylimide compound (1) and the fluorophosphate compound (2) is preferable, and an electrolyte salt having a mixed salt composition including LiN(FSO₂)₂ and LiPF₆ is more preferable.

When an electrolyte salt having a mixed salt composition containing the sulfonylimide compound (1) and another electrolyte is used, from the viewpoint of improving battery performance, a concentration of the other electrolyte (a content, or a total content when two or more other electrolytes are used in combination) in the non-aqueous electrolytic liquid is preferably 0.1 mol/L or more, more preferably 0.2 mol/L or more, still more preferably 0.5 mol/L or more, yet even more preferably 0.7 mol/L or more, and still even more preferably 1 mol/L or more. In addition, from the viewpoints of suppressing a decrease in battery performance due to an increase in viscosity of the electrolytic liquid and suppressing self-discharge of the cell, the concentration of the other electrolyte is preferably 5 mol/L or less, more preferably 3 mol/L or less, even more preferably 2 mol/L or less, and still even more preferably 1.5 mol/L or less.

From the viewpoint of improving battery performance, a total concentration of the electrolyte salts in the non-aqueous electrolytic liquid is preferably 0.8 mol/L or more, more preferably 1 mol/L or more, and still more preferably 1.2 mol/L or more. In addition, from the viewpoint of suppressing a decrease in battery performance due to an increase in viscosity of the electrolytic liquid, the total concentration of the electrolyte salts is preferably 5 mol/L or less, more preferably 3 mol/L or less, and still more preferably 2 mol/L or less.

From the viewpoint of improving battery performance, it is preferable to increase the concentration of the sulfonylimide compound (1). A ratio (sulfonylimide compound (1)):(the other electrolyte) (a molar ratio of the concentration of the sulfonylimide compound (1) to the concentration of the other electrolyte) is preferably 1:25 or more, more preferably 1:10 or more, even more preferably 1:8 or more, yet even more preferably 1:5 or more, still even more preferably 1:2 or more, and particularly preferably 1:1 or more, and is preferably 25:1 or less, more preferably 10:1 or less, even more preferably 5:1 or less, and yet even more preferably 2:1 or less.

### Electrolyte Solvent

The electrolyte solvent includes a carbonate-based solvent. That is, the non-aqueous electrolyte secondary battery according to the present embodiment includes, as one constituent material, a non-aqueous electrolytic liquid containing, as essential components, a carbonate-based solvent as an electrolyte solvent together with the sulfonylimide compound (1). **In** other words, the main component (the component contained at the largest amount) of the electrolyte solvent constituting the non-aqueous electrolytic liquid is not a sulfone compound (a sulfur compound-based solvent described later), but rather a carbonate-based solvent. By using the carbonate-based solvent as the main component of the electrolyte solvent in this manner, low-temperature discharge capacity is enhanced and low-temperature characteristics are improved as compared to a case in which a sulfone compound is used.

Note that the electrolyte solvent may include only a single type of carbonate-based solvent, may be a homogeneous mixed solvent including two or more types of carbonate-based solvents, or may be a heterogeneous mixed solvent including, at prescribed amounts, a carbonate-based solvent and another electrolyte solvent (an electrolyte solvent other than a carbonate-based solvent).

From the viewpoint of improving low-temperature characteristics of the battery, a content of the carbonate-based solvent per 100 mass% of a total amount of the electrolyte solvent is preferably 50 mass% or more, more preferably greater than 50 mass%, even more preferably 70 mass% or more, and still further preferably 80 mass% or more (heterogeneous mixed solvent). Note that an upper limit of the content thereof may be 100 mass% (one type of carbonate-based solvent or a homogeneous mixed solvent including two or more types of carbonate-based solvents).

In the case in which the electrolyte solvent is a heterogeneous mixed solvent containing an electrolyte solvent besides the carbonate-based solvent, from the viewpoint of improving battery performance, a content of the other electrolyte solvent per 100 mass% of the total amount of the electrolyte solvent is preferably less than 50 mass%, more preferably 30 mass% or less, and still more preferably 20 mass% or less.

Examples of the carbonate-based solvent include a chain carbonate-based solvent such as dimethyl carbonate (DMC), ethylmethyl carbonate (EMC), diethyl carbonate (DEC), diphenyl carbonate, and methylphenyl carbonate; a saturated cyclic carbonate-based solvent such as ethylene carbonate (EC), propylene carbonate (PC), 2,3-dimethylethylene carbonate, 1,2-butylene carbonate, and erythritan carbonate; a cyclic carbonate-based solvent having an unsaturated bond such as vinylene carbonate, methylvinylene carbonate, ethylvinylene carbonate, 2-vinylethylene carbonate, and phenylethylene carbonate; and a fluorine-containing cyclic carbonate-based solvent such as fluoroethylene carbonate (FEC), 4,5-difluoroethylene carbonate, and trifluoropropylene carbonate. A single type of the carbonate-based solvent may be used alone, or two or more types thereof may be used in combination. Among the carbonate-based solvents, a chain carbonate-based solvent and a saturated cyclic carbonate-based solvent are preferable, and DMC, EMC, DEC, EC, and PC are more preferable. Moreover, the carbonate-based solvent preferably includes at least one selected from the group consisting of a chain carbonate-based solvent and a saturated cyclic carbonate-based solvent. A homogeneous mixed solvent that includes two or more types of carbonate-based solvents including a chain carbonate-based solvent and a saturated cyclic carbonate-based solvent is more preferable, and a homogeneous mixed solvent including EMC and EC is even more preferable.

As described above, the electrolyte solvent may only include a carbonate-based solvent, but may include another electrolyte solvent. The other electrolyte solvent is not particularly limited as long as the solvent thereof can dissolve and disperse the electrolyte salt, and examples of the other electrolyte solvent include non-aqueous solvents other than the carbonate-based solvent, and any solvent generally used in a battery can be used.

As the non-aqueous solvent (excluding the carbonate-based solvent), a solvent having a large dielectric constant, high solubility of the electrolyte, a boiling point of 60°C or higher, and a wide electrochemical stability range is preferable. The non-aqueous solvent is more preferably an organic solvent with a low water content. Examples of such an organic solvent include an ether-based solvent such as ethylene glycol dimethyl ether, ethylene glycol diethyl ether, tetrahydrofuran, 2-methyl tetrahydrofuran, 2,5-dimethyltetrahydrofuran, tetrahydropyran, a crown ether, triethylene glycol dimethyl ether, tetraethylene glycol dimethyl ether, 1,4-dioxane, and 1,3-dioxolane; an aromatic carboxylate solvent such as methyl benzoate and ethyl benzoate; a lactone-based solvent such as γ-butyrolactone, γ-valerolactone, and δ-valerolactone; a phosphate-based solvent such as trimethyl phosphate, ethyl dimethyl phosphate, diethyl methyl phosphate, and triethyl phosphate; a nitrile-based solvent such as acetonitrile, propionitrile, methoxypropionitrile, glutaronitrile, adiponitrile, 2-methylglutaronitrile, valeronitrile, butyronitrile, and isobutyronitrile; a sulfur compound-based solvent such as dimethyl sulfone, ethyl methyl sulfone, diethyl sulfone, sulfolane, 3-methyl sulfolane, and 2,4-dimethylsulfolane; an aromatic nitrile-based solvent such as benzonitrile and tolunitrile; nitromethane, 1,3-dimethyl-2-imidazolidinone, 1,3-dimethyl-3,4,5,6-tetrahydro-2(1H)-pyrimidinone, and 3-methyl-2-oxazolidinone; and a chain ester solvent such as ethyl acetate, butyl acetate, and propyl propionate. A single type of the solvent may be used alone, or two or more types thereof may be used in combination.

A medium such as a polymer or a polymer gel may be used in place of the electrolyte solvent. When a polymer or a polymer gel is used in place of the electrolyte solvent, a method described below may be employed. That is, examples of the method that may be employed include a method in which a solution prepared by dissolving an electrolyte salt in an electrolyte solvent is added dropwise to a polymer formed into a film by a known method to impregnate and support the electrolyte salt and the electrolyte solvent; a method in which a polymer and an electrolyte salt are melted and mixed at a temperature higher than the melting point of the polymer, after which a film is formed, and the film is impregnated with an electrolyte solvent (the above are gel electrolytes); a method in which a polymer and a non-aqueous electrolytic liquid prepared by dissolving an electrolyte salt in an electrolyte solvent in advance are mixed, after which the mixture is formed into a film by a casting method or a coating method, and the electrolyte solvent is evaporated; and a method in which a polymer and an electrolyte salt are dissolved, mixed, and molded at a temperature equal to or higher than the melting point of the polymer (true polymer electrolytes).

Examples of the polymer used in place of the electrolyte solvent include a polyether-based polymer such as polyethylene oxide (PEO) and polypropylene oxide, which is a homopolymer or a copolymer of epoxy compounds (such as ethylene oxide, propylene oxide, butylene oxide, and allyl glycidyl ether), a methacrylate-based polymer such as polymethyl methacrylate (PMMA), a nitrile-based polymer such as polyacrylonitrile (PAN), a fluorine-based polymer such as polyvinylidene fluoride (PVdF) and polyvinylidene fluoride-hexafluoropropylene, and a copolymer thereof. A single type of the polymer may be used alone, or two or more types thereof may be used in combination.

### Additive

The non-aqueous electrolytic liquid may contain an additive for the purpose of improving various characteristics of a lithium-ion secondary battery. The additive may be added to the non-aqueous electrolytic liquid or may be added in the process of preparing the non-aqueous electrolytic liquid. Examples of the additive include a carboxylic anhydride such as succinic anhydride, glutaric anhydride, maleic anhydride, citraconic anhydride, glutaconic anhydride, itaconic anhydride, diglycolic anhydride, cyclohexane dicarboxylic anhydride, cyclopentane tetracarboxylic dianhydride, and phenylsuccinic anhydride; a sulfur-containing compound such as ethylene sulfite, 1,3-propanesultone, 1,4-butanesultone, methyl methanesulfonate, busulfan, sulfolane, sulfolene, dimethyl sulfone, tetramethylthiuram monosulfide, and trimethylene glycol sulfate; a nitrogen-containing compound such as 1-methyl-2-pyrrolidinone, 1-methyl-2-piperidone, 3-methyl-2-oxazolidinone, 1,3-dimethyl-2-imidazolidinone, and N-methylsuccinimide; a saturated hydrocarbon compound such as heptane, octane, and cycloheptane; carbonate compounds such as vinylene carbonate, fluoroethylene carbonate (FEC), trifluoropropylene carbonate, phenylethylene carbonate, and erythritan carbonate; sulfamic acid (amidosulfuric acid, H₃NSO₃); a sulfamate salt (such as an alkali metal salt such as a lithium salt, a sodium salt, and a potassium salt; an alkaline earth metal salt such as a calcium salt, a strontium salt, and a barium salt; another metal salt such as a manganese salt, a copper salt, a zinc salt, an iron salt, a cobalt salt, and a nickel salt; an ammonium salt; and a guanidine salt); a fluorosulfonic acid compound such as lithium fluorosulfonate (LiFSO₃), sodium fluorosulfonate (NaFSO₃), potassium fluorosulfonate (KFSO₃), and magnesium fluorosulfonate (Mg(FSO₃)₂); a fluorophosphate compound such as lithium monofluorophosphate (Li₂PO₃F) and lithium difluorophosphate (LiPO₂F₂); a fluoro oxalate compound such as a lithium salt having an oxalic acid skeleton, such as lithium bis(oxalato)borate (LiBOB), lithium difluoro(oxalate)borate (LiDFOB), lithium difluoro(oxalato)phosphate (LiDFOP), lithium tetrafluoro(oxalate)phosphate (LiTFOP), lithium difluorobis(oxalato)phosphate (LiDFBOP), and lithium tris(oxalato)phosphate; and a phosphorus atom-containing compound represented by General Formula (4) (hereinafter, referred to as "phosphorus atom-containing compound (4)").
[Formula 4]

[-P(=O)(OR¹)O-]ₙ (4)

A single type of the additive may be used alone, or two or more types thereof may be used in combination.

### Phosphorus Atom-Containing Compound (4)

Use of a phosphorus atom-containing compound (4) as an additive means that a predetermined amount or more of the phosphorus atom-containing compound (4) is contained in the non-aqueous electrolytic liquid containing the sulfonylimide compound (1). In other words, the non-aqueous electrolytic liquid according to the present embodiment may contain the phosphorus atom-containing compound (4) as an additive. The phosphorus atom-containing compound (4) may be added to the non-aqueous electrolytic liquid, or may be added in the process of preparing the non-aqueous electrolytic liquid. The non-aqueous electrolytic liquid may contain another additive exemplified above together with the phosphorus atom-containing compound (4).

In General Formula (4): [-P(=O)(OR¹)O-]ₙ, R¹ represents an alkyl group having 1-6 carbon atoms (which may have a substituent), a fluoroalkyl group having 1-6 carbon atoms (which may have a substituent), an aryl group (which may have a substituent), a silyl group (which may have a substituent), an alkali metal atom, an onium salt, or a hydrogen atom. Among R¹, a linear alkyl group having 1-6 carbon atoms (which may have a substituent), a trifluoroalkyl group having 1-6 carbon atoms (which may have a substituent), a trialkylsilyl group having 1-6 carbon atoms (which may have a substituent), and a silyl group in which an alkyl group having 1-6 carbon atoms (which may have a substituent) and two alkyl groups having 1-6 carbon atoms (which may have a substituent) different from each other in details such as the number of carbon atoms and structure (linear, cyclic or the like) are bonded to each other are preferable; a linear alkyl group having 1-3 carbon atoms (which may have a substituent), a trifluoroalkyl group having 1-3 carbon atoms (which may have a substituent, a trialkylsilyl group having 1-4 carbon atoms (which may have a substituent, and a silyl group in which an alkyl group having 1-4 carbon atoms (which may have a substituent and two alkyl groups having 1-6 carbon atoms (which may have a substituent different from each other in details such as the number of carbon atoms and structure (linear, cyclic or the like) are bonded to each other are more preferable; an ethyl group, a trifluoroethyl group, a trimethylsilyl group, a triethylsilyl group, a triisopropylsilyl group, a (tertiary (tert-)butyl) dimethylsilyl group, and a (tert-butyl)diphenylsilyl group are even more preferable; and a trimethylsilyl group is particularly preferable. In the present description, the trialkylsilyl group having 1-6 carbon atoms or having 1-4 carbon atoms refers to a silyl group to which three alkyl groups having from 1 to 6 carbon atoms or from 1 to 4 carbon atoms are bonded. In addition, in General Formula (4), R¹ may be a trialkoxysilyl group (-Si(-OR)₃) in which three alkyl groups (R) having from 1 to 6 or from 1 to 4 carbon atoms are bonded to a silyl group through an oxygen atom. Examples of the trialkoxysilyl group include a trimethoxysilyl group, a triethoxysilyl group, a triisopropoxysilyl group, a (tert-butoxy)dimethoxysilyl group, and a (tert-butoxy)diphenoxysilyl group. Note that the three alkyl groups or alkoxy groups may be the same or different. In General Formula (4), R¹ is preferably the same group.

In General Formula (4), n represents an integer of 2 or more (degree of polymerization). For example, n may be from 2 to 200, or the like.

Specific examples of the phosphorus atom-containing compound (4) include ethyl polyphosphate (R¹ represents an ethyl group in General Formula (4)), trimethylsilyl polyphosphate (R¹ represents a trimethylsilyl group (TMS) in General Formula (4)), triethylsilyl polyphosphate (R¹ represents a triethylsilyl group (TES) in General Formula (4)), (triisopropylsilyl)polyphosphate (R¹ represents a triisopropylsilyl group (TIPS) in General Formula (4)), [(tert-butyl)dimethylsilyl] polyphosphate (R¹ represents a (tert-butyl)dimethylsilyl group (TBDMS) in General Formula (4)), [(tert-butyl)diphenylsilyl] polyphosphate (R¹ represents a (tert-butyl)diphenylsilyl group (TBDPS) in General Formula (4)), trimethoxysilyl polyphosphate (R¹ represents a trimethoxysilyl group in General Formula (4)), triethoxysilyl polyphosphate (R¹ represents a triethoxysilyl group in General Formula (4)), (triisopropoxysilyl)polyphosphate (R¹ represents a triisopropoxysilyl group in General Formula (4)), [(tert-butoxy)dimethoxysilyl] polyphosphate (R¹ represents a (tert-butoxy)dimethoxysilyl group in General Formula (4)), and [(tert-butoxy)diphenoxysilyl] polyphosphate (R¹ represents a (tert-butoxy)diphenoxysilyl group in General Formula (4)). A single type of the phosphorus atom-containing compound (4) may be used alone, or two or more types thereof may be used in combination. Among the phosphorus atom-containing compounds (4), trimethylsilyl polyphosphate is preferable.

Structure of trimethylsilyl polyphosphate, such as a chain structure represented by the following Structural Formula (4-1), a cyclic structure represented by the following Structural Formula (4-2), and a branched structure represented by the following Structural Formula (4-3) can be analyzed, for example, by measuring through ³¹P-NMR or the like the presence or absence of a peak indicating a bond between a phosphorus atom and a group in the vicinity of the phosphorus atom and the abundance ratio thereof (integral ratio of each peak). Examples of the measurement conditions of ³¹P-NMR include the conditions described in the Examples section below.

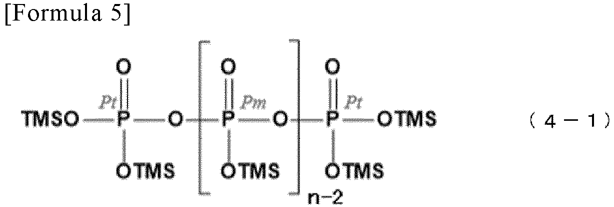

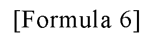

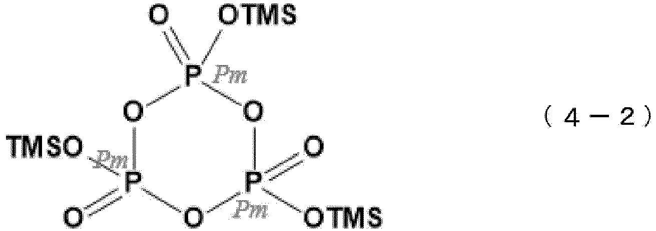

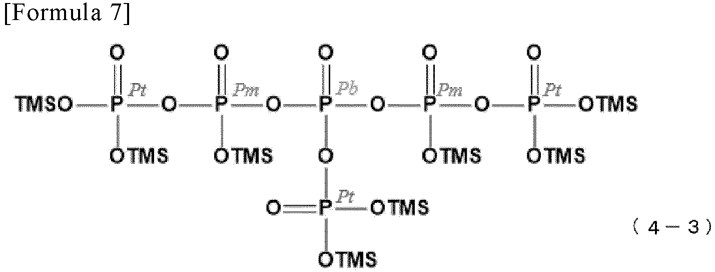

In Structural Formulas (4-1) to (4-3), "TMS" represents a trimethylsilyl group, n represents a degree of polymerization, and Pt, Pm, and Pb each represent a peak of a phosphorus atom. Pt indicates the peak of a phosphorus atom at a terminal, a side chain, or the like, and more specifically, a phosphorus atom having one group in which a hydrogen atom of a hydroxy group is substituted with another adjacent phosphorus atom (hereinafter, the group thereof may also be referred to as a "-O-P group"). Pm indicates the peak of a phosphorus atom having a linear structure, and more specifically, a phosphorus atom having two "-O-P groups". Pb indicates the peak of a phosphorus atom having a branched structure, and more specifically, a phosphorus atom having three "-O-P groups". In this manner, details such as the presence or absence of a branched structure, the abundance ratio thereof, and the degree of polymerization n are estimated from the presence or absence of Pt, Pm, and Pb and the integral ratio thereof. For example, in a case in which trimethylsilyl polyphosphate entirely has a chain structure represented by Structural Formula (4-1) (a structure having no Pb peak), when the integral value of the Pt region is 1, the degree of polymerization n thereof is expressed by 2 × {(integral value of Pt) + (integral value of Pm)} ≈ 2 × {1 + (integral value of Pm)}. Moreover, when the integral value of the region of Pt is 2, the degree of polymerization n is expressed by (integral value of Pt) + (integral value of Pm) ≈ 2 + (integral value of Pm). For example, in the case of trimethylsilyl polyphosphate used in examples described below, the degree of polymerization n is calculated to be 4.87 on average. When trimethylsilyl polyphosphate with a cyclic structure represented by Structural Formula (4-2) is included, the degree of polymerization n is estimated to be smaller than that described above. Trimethylsilyl polyphosphate having a Pb peak, which indicates a branched structure represented by Structural Formula (4-3), is preferably included from the viewpoints of suppressing self-discharge of the battery and further improving battery performance. In this case, the integral ratio of Pt, Pm and Pb is preferably Pt : Pm : Pb = from 1.0 : 3.0 : 0.2 to 1.0 : 9.0 : 3.0, and more preferably Pt : Pm : Pb = from 1.0 : 6.0 : 0.7 to 1.0 : 7.0 : 1.2.

Among the additives, from the viewpoint of suppressing self-discharge of the battery and elution of Ni from the positive electrode, a phosphorus atom-containing compound (4) is preferable, trimethylsilyl polyphosphate, ethyl polyphosphate, (triisopropylsilyl) polyphosphate, and [(tert-butyl)dimethylsilyl] polyphosphate are more preferable, and trimethylsilyl polyphosphate including a branched structure represented by Structural Formula (4-3) is even more preferable.

Relative to 100 mass% of a total amount of the components contained in the non-aqueous electrolytic liquid, an amount of the additive is in a range of preferably from 0.1 mass% to 10 mass%, more preferably from 0.2 mass% to 8 mass%, still more preferably from 0.3 mass% to 5 mass%, further preferably from 0.3 mass% to 3 mass%, and still further preferably from 0.3 mass% to 1 mass%. When the amount of the additive is too small, it may be difficult to achieve the effect derived from the additive. On the other hand, even when a large amount of the additive is used, it may be difficult to achieve an effect proportional to the added amount, and the viscosity of the non-aqueous electrolytic liquid may increase and result in a decrease in conductivity.

As described above, the non-aqueous electrolytic liquid according to the present embodiment is composed of the sulfonylimide compound (1) and the carbonate-based solvent, and, as necessary, various components such as another electrolyte salt, another electrolyte solvent, and various additives. The non-aqueous electrolytic liquid can be prepared, for example, by mixing these components at a predetermined composition (mass) ratio.

### Positive Electrode

The positive electrode includes a positive electrode current collector and a positive electrode composite material layer, and the positive electrode composite material layer is formed on the positive electrode current collector and is usually formed into a sheet shape.

Examples of metal used for the positive electrode current collector include iron, copper, aluminum, nickel, stainless steel, titanium, tantalum, gold, and platinum. Of these, aluminum is preferred. The positive electrode current collector has no particularly limited shape or dimensions.

The positive electrode composite material layer is formed from a positive electrode composite material (positive electrode composition). The positive electrode composite material contains a positive electrode active material, a conductive auxiliary, a binder, a solvent or the like for dispersing these components, and the like.

In the secondary battery according to the present embodiment, the positive electrode (positive electrode composite material) can suitably use, for example, a ternary positive electrode active material such as LiNi_{1/3}CO_{1/3}Mn_{1/3}O₂(NCM111), LiNi_{0.5}CO_{0.2}Mn_{0.3}O₂(NCM523), LiNi_{0.6}Co_{0.2}Mn_{0.2}O₂(NCM622), or LiNi_{0.8}Co_{0.1}Mn_{0.1}O₂(NCM811); or an iron phosphate-based positive electrode active material having an olivine structure such as LiFePO₄, or LiFe_{0.995}Mn_{0.005}PO₄. A single type of the positive electrode active material may be used alone, or two or more types thereof may be used in combination.

Among the ternary positive electrode active materials, a high Ni-containing ternary positive electrode active material represented by the General Formula (5):
[Formula 8]

LiᵥNiₓCo_{y}Mn_{z}O_{2+w} (5)

wherein, 0.2 ≤ v ≤ 1.2, 0.5 ≤ x ≤ 0.9, 0 < y ≤ 0.3, 0 < z ≤ 0.4, x + y + z = 1, -0.2 ≤ w ≤ 0.2
where v represents a molar ratio of Li, x represents a molar ratio of Ni, y represents a molar ratio of Co, z represents a molar ratio of Mn, and w (2 + w) represents a molar ratio of O,
(hereinafter, the positive electrode active material thereof is referred to as the "high Ni-containing ternary positive electrode active material (5)") is preferable.

In the high Ni-containing ternary positive electrode active material (5), a content proportion of Ni ("x" in General Formula (5)) with respect to a total amount of 100% (100 mol%) of the transition metals on a molar basis is 50% or more (0.5 ≤ x), preferably 55% or more (0.55 ≤ x), and more preferably 70% or more (0.7 ≤ x). An upper limit of the content proportion is 90% or less (x ≤ 0.9), preferably less than 85% (x < 0.85), and more preferably 80% or less (x ≤ 0.8). Content proportions of the components ("v", "y", "z", and "w" (2 + w) in General Formula (5)) other than Ni in the high Ni-containing ternary positive electrode active material (5) may be appropriately adjusted within the ranges of the molar ratios described above.

A single type of the high Ni-containing ternary positive electrode active material (5) may be used alone, or two or more types thereof may be used in combination. As the high Ni-containing ternary positive electrode active material (5), a commercially available product may be used, or a product obtained by synthesis through a known method may be used. Specific examples of the high Ni-containing ternary positive electrode active material (5) include NCM523, NCM622, and NCM811.

The positive electrode preferably contains at least one of the ternary positive electrode active material and the iron phosphate-based positive electrode active material described above, but may contain another positive electrode active material. Any other positive electrode active material may be used as long as the positive electrode active material can occlude and release lithium ions, and for example, any positive electrode active material used in a known secondary battery (lithium-ion secondary battery) can be used.

Examples of the positive electrode active material used in a lithium-ion secondary battery include lithium cobaltate; lithium nickelate; lithium manganate; a transition metal oxide such as a ternary oxide other than the ternary positive electrode active material described above, examples thereof including a transition metal oxide represented by LiNi_{1-v-w}CoᵥAl_{w}O₂ (0 ≤ v ≤ 1, 0 ≤ w ≤ 1); a compound having an olivine structure such as LiAPO₄A (A = Mn, Ni, Co); a solid-solution material in which a plurality of transition metals are incorporated (a solid solution of electrochemically inactive layered Li₂MnO₃ and electrochemically active layered LiMO₂(M = transition metal such as Co or Ni)); LiCoₓMn₁₋ₓO₂ (0 ≤ x ≤ 1); LiNiₓMn₁₋ₓO₂ (0 ≤ x ≤ 1); a compound having a fluoro-olivine structure such as Li₂APO₄F (A = Fe, Mn, Ni, Co); and sulfur. A single type of the positive electrode active material may be used alone, or two or more types thereof may be used in combination.

From the viewpoint of improving the output characteristics and electrical characteristics of the secondary battery, relative to 100 mass% of a total amount of the components included in the positive electrode composite material, a content of the positive electrode active material (a total content when a plurality of positive electrode active materials are included) is preferably 75 mass% or more, more preferably 85 mass% or more, and even more preferably 90 mass% or more, and is preferably 99 mass% or less, more preferably 98 mass% or less, and even more preferably 95 mass% or less.

A conductive auxiliary is used to improve the output of a lithium-ion secondary battery. Electrically conductive carbon is primarily used as the conductive auxiliary. Examples of the electrically conductive carbon include carbon black, fibrous carbon, and graphite. A single type of the conductive auxiliary may be used alone, or two or more types thereof may be used in combination. Among the conductive auxiliaries, carbon black is preferable. Examples of carbon black include Ketjen black and acetylene black. From the viewpoint of improving the output characteristics and electrical characteristics of the lithium-ion secondary battery, a content percentage of the conductive auxiliary in the non-volatile portion of the positive electrode composite material is preferably from 1 to 20 mass%, and more preferably from 1.5 to 10 mass%.

Examples of the binder include a fluorine-based resin such as polyvinylidene fluoride and polytetrafluoroethylene; a synthetic rubber such as styrene-butadiene rubber and nitrile-butadiene rubber; a polyamide-based resin such as polyamide-imide; a polyolefin-based resin such as polyethylene and polypropylene; a poly(meth)acrylic-based resin; a polyacrylic acid; and a cellulose-based resin such as carboxymethyl cellulose. A single type of the binder may be used alone, or two or more types thereof may be used in combination. Moreover, the binder may be in a state of being dissolved in the solvent at the time of use or in a state of being dispersed in the solvent at the time of use.

Examples of the solvent include N-methylpyrrolidone, dimethylformamide, dimethylacetamide, methyl ethyl ketone, tetrahydrofuran, acetonitrile, acetone, ethanol, ethyl acetate, and water. A single type of the solvent may be used alone, or two or more types thereof may be used in combination. The amount of the solvent is not particularly limited and may be appropriately determined according to a production method and a material to be used.

As necessary, the positive electrode composite material may contain, as another component, for example, a polymer, such as a non-fluorine-based polymer such as a (meth)acrylic polymer, a nitrile-based polymer, or a diene-based polymer, and a fluorine-based polymer such as polytetrafluoroethylene; an emulsifier such as an anionic emulsifier, a nonionic emulsifier, or a cationic emulsifier; a dispersant such as a polymer dispersant such as a styrene-maleic acid copolymer or polyvinylpyrrolidone; a thickener such as carboxymethyl cellulose, hydroxyethyl cellulose, polyvinyl alcohol, polyacrylic acid (salt), or an alkali-soluble (meth)acrylic acid - (meth)acrylate copolymer; and a preservative. A content percentage of the other component in the non-volatile portion of the positive electrode composite material is preferably from 0 to 15 mass%, and more preferably from 0 to 10 mass%.

The positive electrode composite material can be prepared by, for example, mixing the positive electrode active material, the conductive auxiliary, the binder, the solvent, and another component as necessary, and dispersing the mixture using a bead mill, a ball mill, a stirring mixer, or the like.

A method for forming the positive electrode (a coating method) is not particularly limited, and examples thereof include: (1) a method of applying (and drying) the positive electrode composite material on the positive electrode current collector through a commonly used application method (for example, a doctor blade method), (2) a method of immersing the positive electrode current collector in the positive electrode composite material (and then drying), (3) a method of bonding (for example, bonding through a conductive adhesive) a sheet formed of the positive electrode composite material onto the positive electrode current collector and pressing (and drying), (4) a method of applying or casting onto the positive electrode current collector a positive electrode composite material to which a liquid lubricant has been added, forming into a desired shape, and then removing the liquid lubricant (and then also uniaxially or multiaxially stretching), and (5) a method of forming a slurry from the positive electrode composite material (or a solid component forming the positive electrode composite material layer) using an electrolytic liquid, transferring the slurry to a current collector (positive electrode current collector) in a semi-solid state, and using the transferred slurry as an electrode (positive electrode) without drying.

Note that as necessary, the positive electrode composite material layer may be dried or pressurized (pressed) after being formed or coated (applied).

### Negative Electrode

The negative electrode includes a negative electrode current collector and a negative electrode composite material layer, and the negative electrode composite material layer is formed on the negative electrode current collector and is usually molded into a sheet shape.

Examples of metal used for the negative electrode current collector include iron, copper, aluminum, nickel, stainless steel (SUS), titanium, tantalum, gold, and platinum. Of these, copper is preferred. The negative electrode current collector has no particularly limited shape and dimensions.

The negative electrode composite material layer is formed from a negative electrode composite material (negative electrode composition). The negative electrode composite material contains a negative electrode active material, a conductive auxiliary, a binder, a solvent for dispersing these components, and the like.

Here, the non-aqueous electrolyte secondary battery according to the present embodiment is configured with a negative electrode that contains, as a negative electrode active material, graphite (graphite) having a peak area ratio (D/G ratio) of a D-band and a G-band analyzed by Raman spectroscopy of 0.7 or less and/or a full-width at half-maximum of the G-band analyzed by Raman spectroscopy of 28 cm⁻¹ or less. That is, in the non-aqueous electrolyte secondary battery according to the present embodiment, one constituent material is a negative electrode containing, as an essential component and as a negative electrode active material, graphite (hereinafter, also referred to as "specific graphite") having a D/G ratio of 0.7 or less and/or a full-width at half-maximum of the G-band of 28 cm⁻¹ or less. Through the use of a negative electrode active material that contains the specific graphite in this manner, self-discharge of the battery attributed to the sulfonylimide compound (1) (particularly LiN(FSO₂)₂) is suppressed, and storage characteristics are improved, even without the use of a non-aqueous electrolytic liquid in which CO₂ or the like is intentionally dissolved.

In a Raman spectrum measured with Raman light excited by a laser having a wavelength of 532 nm, the "peak area ratio (D/G ratio) of a D-band and a G-band analyzed by Raman spectroscopy" refers to a ratio (ID/IG, D-band/G-band area ratio) of the area of a peak intensity ID near 1350 cm⁻¹, which is attributed to a defect in the graphite structure contained in the carbon material to the area of a peak intensity IG near 1580 cm⁻¹, which is attributed to the graphite structure (crystallinity) contained in the carbon material. Note that these peaks may appear at positions shifted by about ±10 cm⁻¹. The above-mentioned effect is exhibited if the D/G ratio is 0.7 or less, but from the viewpoint of improving the effect thereof, the D/G ratio is preferably 0.5 or less, and more preferably 0.2 or less. A lower limit of the D/G ratio is not particularly limited, but may be, for example, 0.05 or greater. Graphite having a D/G ratio within the above range refers to graphite having high crystallinity and relatively few irregularities and defects in the graphite structure. Examples of a method for measuring the Raman spectrum include a method described in Examples section below.

In the Raman spectrum measured with Raman light excited by a laser having a wavelength of 532 nm, the "full-width at half-maximum of the G-band analyzed by Raman spectroscopy" refers to the full-width at half-maximum of the peak intensity IG near 1580 cm⁻¹, which is attributed to the graphite structure in the carbon material. The full-width at half-maximum of the G-band is related to the crystallinity of the graphite structure or the amount of irregularities and defects therein. If the full-width at half-maximum of the G-band is 28 cm⁻¹ or less, the above-described effect is exhibited, but from the viewpoint of improving the effect thereof, the full-width at half-maximum of the G-band is preferably 23 cm⁻¹ or less, and more preferably 20 cm⁻¹ or less. A lower limit of the full-width at half-maximum of the G-band is not particularly limited, and may be, for example, 10 cm⁻¹ or greater. Graphite having a full-width at half-maximum of the G-band within the above range refers to graphite having high crystallinity and relatively few irregularities and defects in the graphite structure.

It should be noted that the negative electrode (negative electrode active material) may only contain the specific graphite having a D/G ratio of 0.7 or less and/or a full-width at half-maximum of the G-band of 28 cm⁻¹ or less. Two or more types of graphite may be contained as long as the D/G ratio is 0.7 or less and/or the full-width at half-maximum of the G-band is 28 cm⁻¹ or less. The negative electrode may contain, in addition to the specific graphite, another graphite (graphite having a D/G ratio of greater than 0.7 and/or a full-width at half-maximum of the G-band of greater than 28 cm⁻¹). In this case, a mixture of graphite (mixed graphite) has a D/G ratio of 0.7 or less and/or a full-width at half-maximum of the G-band of 28 cm⁻¹ or less. The D/G ratio and the full-width at half-maximum of the G-band of the mixed graphite can be proportionally calculated from a mixing ratio of two types of graphite in the mixture, and the mixing ratio of two types of graphite may be adjusted such that the D/G ratio and the full-width at half-maximum of the G-band of the mixed graphite are within the above-mentioned ranges.

Relative to 100 mass% of the total amount of the negative electrode active material, a content of the specific graphite is preferably 50 mass% or more, more preferably 60 mass% or more, further preferably 70 mass% or more, and still further preferably 90 mass% or more. An upper limit of the content may be 100 mass%.

In addition, from the viewpoint of suppressing self-discharge of the battery, a content of another negative electrode active material per 100 mass% of the total amount of the negative electrode active material is preferably 70 mass% or less, more preferably 50 mass% or less, further preferably less than 50 mass%, even more preferably 20 mass% or less, and still further preferably 10 mass% or less.

Examples of the specific graphite having a D/G ratio of 0.7 or less and/or a full-width at half-maximum of the G-band of 28 cm⁻¹ or less include graphite such as MAGE available from Hitachi Chemical Co., Ltd., and SFG15 and SLP50 available from Imerys Graphite & Carbon Switzerland SA. A single type of the specific graphite may be used alone, or two or more types thereof may be used in combination.

As described above, the negative electrode active material may only contain the specific graphite, but may also contain another negative electrode active material. As the other negative electrode active material, a known negative electrode active material or the like used in various batteries (for example, a lithium secondary battery) or the like can be used, and any material may be used as long as it can occlude and release lithium ions. Examples of the other negative electrode active material that can be used include a carbon material such as a mesophase sintered body made of coal or petroleum pitch, and non-graphitizable carbon; a Si-based negative electrode material such as Si, Si alloys, and SiO; an Sn-based negative electrode material such as Sn alloys; lithium metal; and a lithium alloys such as a lithium-aluminum alloy. A single type of the other negative electrode active material may be used alone, or two or more types thereof may be used in combination.

The negative electrode composite material may further contain a conductive auxiliary (conductive substance), a binder, a solvent, and the like. As the conductive auxiliary, the binder, the solvent, and the like, the same components as those described above can be used. **In** addition, the usage ratio and the like are also the same as described above.

As a method for producing the negative electrode, a method similar to the method for producing the positive electrode may be employed.

### Separator

The non-aqueous electrolyte secondary battery according to the present embodiment may be provided with a separator. The separator is disposed so as to separate the positive electrode and the negative electrode. The separator is not particularly limited, and any known separator can be used in the present disclosure. Specific examples of the separator include a porous sheet (for example, a polyolefin-based microporous separator or a cellulose-based separator) made of a polymer that can absorb and retain an electrolytic liquid (non-aqueous electrolytic liquid), a non-woven fabric separator, and a porous metal body.

Examples of a material of the porous sheet include polyethylene, polypropylene, and a laminate having a three layer structure of polypropylene/polyethylene/polypropylene.

Examples of a material of the non-woven fabric separator include cotton, rayon, acetate, nylon, polyester, polypropylene, polyethylene, polyimide, aramid, and glass, and the material exemplified above may be used alone or in a combination of two or more according to required mechanical strength and the like.

### Battery Packaging Material

A battery element provided with a positive electrode, a negative electrode, and a non-aqueous electrolytic liquid (and further a separator) is usually housed in a battery packaging material in order to protect the battery element from external impact, environmental deterioration, and the like during use of the battery. The material of the battery packaging material is not particularly limited, and any known packaging material can be used.

As necessary, expanded metal, an overcurrent-preventing element such as a fuse or a positive temperature coefficient (PTC) element, a lead plate, or the like may be added into the battery packaging material to prevent an increase in internal pressure of the battery and over-charge and over-discharge.

The shape of the battery (lithium-ion secondary battery or the like) is not particularly limited, and any shape known as the shape of a battery (lithium-ion secondary battery or the like) can be used, such as a cylindrical shape, a square shape, a laminated shape, a coin shape, and a large shape. Moreover, when the battery is used as a high-voltage power supply (from several 10 V to several 100 V) to be mounted in an electric vehicle, a hybrid electric vehicle, or the like, a battery module configured by connecting individual batteries in series can be used.

A rated charging voltage of the secondary battery (such as a lithium-ion secondary battery) is not particularly limited, but when the secondary battery includes a positive electrode containing, as a primary component, the above-described ternary positive electrode active material, the rated charging voltage may be, for example, 3.6 V or higher, preferably 4.0 V or higher, more preferably 4.1 V or higher, and even more preferably 4.2 V or higher. As the rated charging voltage becomes higher, the energy density can be increased. However, from the viewpoint of safety or the like, the rated charging voltage may be, for example, 4.6 V or less (for example, 4.5 V or less).

### Method for Producing Non-Aqueous Electrolyte Secondary Battery

The non-aqueous electrolyte secondary battery according to the present embodiment can be easily produced by, for example, stacking a positive electrode and a negative electrode (with a separator interposed therebetween as necessary), placing the obtained stacked body into a battery packaging material, injecting a non-aqueous electrolytic liquid into the battery packaging material, and sealing the battery packaging material.

As described above, in the non-aqueous electrolyte secondary battery containing the sulfonylimide compound (1) according to the present embodiment, a specific electrolyte solvent containing a carbonate-based solvent (at an amount of preferably 50 mass% or more per 100 mass% of the total amount of the electrolyte solvents) is used in combination with a specific negative electrode containing, as a negative electrode active material, graphite (at an amount of preferably 30 mass% or more per 100 mass% of the total amount of the negative electrode active materials) having a D/G ratio of 0.7 or less and/or a full-width at half-maximum of the G-band of 28 cm⁻¹ or less. Through this, a synergistic effect of improving self-discharge (storage characteristics) through the use of the specific negative electrode and improving low-temperature characteristics through the use of the specific electrolyte solvent is achieved in the non-aqueous electrolyte secondary battery.

### Examples

Hereinafter, the present disclosure will be described on the basis of examples. It should be noted that the present disclosure is not limited to examples described below, and the examples described below can be modified and changed on the basis of the gist of the present disclosure, and such modifications and changes are not excluded from the scope of the present disclosure.

### Raman Spectroscopic Measurements of Graphite

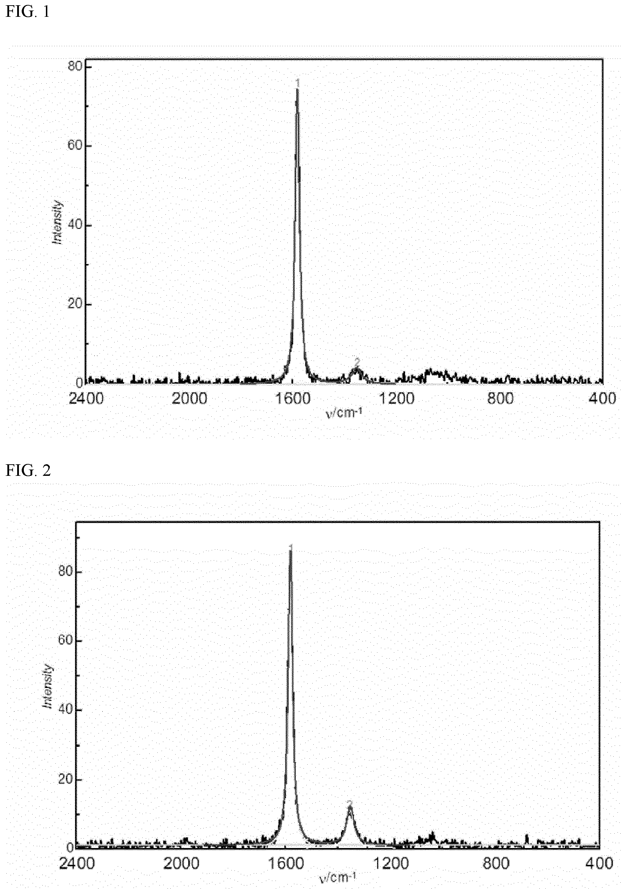

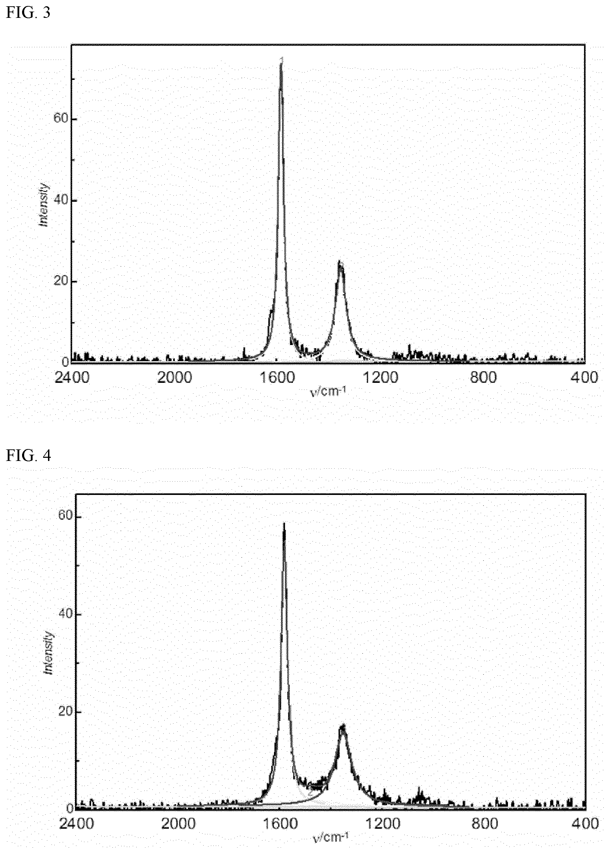

The various types of graphite described in Table 1 below were subjected to Raman spectroscopy conditions described below using the JASCO NRS-3100 (available from JASCO Corporation). In each of the obtained Raman spectra (D/G charts, see FIGS. 1 to 5), an area of peak intensity IG in the vicinity of 1580 cm⁻¹ was defined as a "peak area of the G-band", an area of peak intensity ID in the vicinity of 1350 cm⁻¹ was defined as a "peak area of the D-band", and a ratio of these areas was calculated as a "peak area ratio (D/G ratio) of the D-band and G-band". Moreover, a full-width at half-maximum of the peak intensity IG in the vicinity of 1580 cm⁻¹ was calculated as a "full-width at half-maximum of the G-band". The results thereof are shown in Table 1.

### Raman Spectrometry Conditions

· Laser wavelength: 532 nm
· Exposure time: 5 seconds × 4 times
· Center wavenumber: 2250 cm⁻¹
· Slit: φ0.2 mm
· Dimmer: OD1 (laser output 0.7 mW)
· Objective lens: 20×
· Baseline correction (linear correction from 400 cm⁻¹ to 2400 cm⁻¹)

**[Table 1]**

| Graphite | | Peak Position (cm⁻¹) | | Area Ratio D/G ratio | Full-Width at Half-Maximum of G-band (cm⁻¹) |
|---|---|---|---|---|---|
| Product Name | Type | G-band | D-band | | |
| MAGE | Artificial graphite | 1581 | 1351 | 0.09 | 20 |
| SFG15 | Artificial graphite | 1582 | 1352 | 0.22 | 21 |
| SLP50 | Artificial graphite | 1584 | 1351 | 0.64 | 25 |
| O-MAC | Natural graphite | 1582 | 1351 | 0.75 | 31 |
| SMG | Natural graphite | 1587 | 1348 | 1.1 | 45 |

### Example 1 Series

### Production of Negative Electrode

### Production Example 1

An aqueous slurry was prepared with a compositional ratio (mass ratio, same hereinafter) of MAGE (available from Hitachi Chemical Co., Ltd.) : carbon fiber (VGCF, available from Showa Denko K.K.) : carboxymethyl cellulose (CMC, commercially available product) : styrene-butadiene rubber (SBR, commercially available product) = 100 : 2 : 1 : 1. The aqueous slurry was coated (coating weight: 9.8 mg/cm²) onto one side of a copper foil, dried, and then roll-pressed, and thereby a negative electrode 1-1 was produced.

### Production Example 2

An aqueous slurry having a compositional ratio of SFG15 (available from Imerys Graphite & Carbon Switzerland SA) : VGCF : CMC : SBR = 100 : 2 : 1 : 1 was prepared, the slurry was coated (coating weight: 9.8 mg/cm²) onto one side of a copper foil, dried, and then roll-pressed, and thereby a negative electrode 1-2 was produced.

### Production Example 3

An aqueous slurry having a compositional ratio of SLP50 (available from Imerys Graphite & Carbon Switzerland SA) : VGCF : CMC : SBR = 100 : 2 : 1 : 1 was prepared, the slurry was coated (coating weight: 9.8 mg/cm²) onto one side of a copper foil, dried, and then roll-pressed, and thereby a negative electrode 1-3 was produced.

### Production Example 4

The mixed graphite was obtained by mixing SLP50 and SFG15 at a mass ratio of 85:15, after which an aqueous slurry having a compositional ratio of the mixed graphite : VGCF : CMC : SBR = 100 : 2 : 1 : 1 was prepared, the slurry was coated (coating weight: 9.8 mg/cm²) onto one side of a copper foil, dried, and then roll-pressed, and thereby a negative electrode 1-4 was produced.

### Production Example 5

An aqueous slurry having a compositional ratio of O-MAC (available from Osaka Gas Chemicals Co., Ltd.) : VGCF : CMC : SBR = 100 : 2 : 1 : 1 was prepared, the slurry was coated (coating weight: 9.8 mg/cm²) onto one side of a copper foil, dried, and then roll-pressed, and thereby a negative electrode 1-5 was produced.

### Production Example 6

An aqueous slurry having a compositional ratio of SMG (available from Hitachi Chemical Co., Ltd.) : VGCF : CMC : SBR = 100 : 2 : 1 : 1 was prepared, the slurry was coated (coating weight: 9.8 mg/cm²) onto one side of a copper foil, dried, and then roll-pressed, and thereby a negative electrode 1-6 was produced.

### Production of Laminated Battery (Examples 1-1 to 1-12 and Comparative Examples 1-1 to 1-12)

. A ternary positive electrode (LiNi_{1/3}Co_{1/3}Mn_{1/3}O₂ (NCM111), available from Umicore N.V.), acetylene black (Denka Black, available from Denka Co., Ltd.), graphite (SP270, available from Nippon Graphite Industries Co., Ltd.), and polyvinylidene fluoride (PVdF) (L #7208, available from Kureha Corporation) were weighed at a compositional (mass) ratio of 100 : 3 : 3 : 3 and dispersed in N-methyl-2-pyrrolidone (NMP) to prepare a slurry. One side of an aluminum foil was coated (coating weight: 19.8 mg/cm²) with the prepared slurry, dried, and then roll-pressed, and thereby a positive electrode was produced. The obtained positive electrode was cut into an effective area of 12 cm².
· The negative electrode obtained in each production example was cut to an effective area of 13.44 cm². The types of used negative electrodes are shown in Tables 2 and 3 below.
. Non-aqueous electrolytic liquids (hereinafter, also simply referred to as "electrolytic liquids") were prepared by dissolving electrolyte salts having mixed salt compositions including LiFSI (available from Nippon Shokubai Co., Ltd.) and LiPF₆ (available from Stella Chemifa Corp.) in electrolyte solvents of the types and compositions (volumetric ratios) described in Tables 2 and 3 such that the concentration of the electrolyte salts in each electrolytic liquid was 0.6 mol/L.
· A polarity-inducing lead was ultrasonically welded to the positive and negative electrodes that were cut, the positive and negative electrodes were oriented so as to be opposing with a polyethylene (PE) separator having a thickness of 25 µm interposed therebetween, and three sides were sealed with a laminate package, and thereby a cell was prepared. An amount of 700 µL of one of the electrolytic liquids shown in Tables 2 and 3 was injected from the one unsealed side of the obtained cell, and thereby a 30 mAh laminated battery (lithium-ion battery) was produced as a non-aqueous electrolyte secondary battery.
· After injection of the electrolytic liquid, the battery was charged at a constant current of 6 mA for 3 hours, and then degassed by cleaving one piece and once again vacuum-sealing. The cell after degassing was stored at 25°C for 48 hours, and then charged and discharged under conditioning conditions 1 described below, and thereby a battery for evaluation was completed.

### Conditioning Conditions 1

First cycle charging: charge at a constant current of 3 mA and a constant voltage of 4.2 V, cut-off at 0.3 mA ⇒ discharging: discharge at 6 mA, cut-off at 2.75 V.
Second cycle charging: charge at a constant current of 6 mA and a constant voltage of 4.2 V, cut-off at 0.6 mA ⇒ discharging: discharge at 6 mA, cut-off at 2.75 V.
Third cycle charging: charge at a constant current of 6 mA and a constant voltage of 4.2 V, cut-off at 0.6 mA ⇒ discharging: discharge at 30 mA, cut-off at 2.75 V.

### Evaluation of Laminated Battery

### Measurement of Low-Temperature Discharge Capacity (Evaluation of Low-Temperature Characteristics)

The batteries for evaluation were charged at 25°C through a constant current of 30 mA and a constant voltage of 4.2 V with a cut-off of 0.6 mA, and then soaked at 0°C for 2 hours. Subsequently, the discharge capacity at a cut-off of 2.75 V was measured at 0°C and 30 mA. The results are presented in Tables 2 and 3. Note that a larger low-temperature discharge capacity means more excellent low-temperature characteristics.

### Measurement of Self-Discharge Capacity (OCV) (Evaluation of Storage Characteristics)

The batteries for evaluation were charged to a fully charged state through a constant current of 30 mA and a constant voltage of 4.2 V with a cut-off of 0.6 mA. The open circuit voltage (OCV) of each battery after being fully charged was measured (initial OCV). After measurements, the batteries were stored at 60°C for 28 days, and then stored at 25°C for 4 hours, after which the OCV was measured (OCV after 28 days at 60°C (post-storage)). Using these measured values, a difference (ΔV) between the initial OCV and the post-storage OCV was calculated as the self-discharge. The results are presented in Tables 2 and 3. The higher the post-storage OCV, that is, the smaller the self-discharge (ΔV), the more the self-discharge of the battery is suppressed (the more excellent the storage characteristics).

**[Table 2]**

| Example 1 Series (1) | Electrolyte Salt Composition | Electrolyte Solvent Composition | Negative Electrode | Active Material | Area Ratio D/G ratio | Full-Width at Half-Maximum of G-band (cm⁻¹) | Low-temperature (0°C) Discharge Capacity (mAh) | OCV (V) | | |
|---|---|---|---|---|---|---|---|---|---|---|
| | | | | | | | | Initial (before storage) | After 28 days at 60°C (after storage) | Self-discharge (ΔV) |
| Example 1-1 | 0.6M LiFSI + 0.6M LiPF₆ | EC/EMC = 3/7 | Negative electrode 1-1 | MAGE | 0.09 | 20 | 16.7 | 4.1955 | 4.0337 | 0.1618 |
| Example 1-2 | | EC/EMC = 3/7 | Negative electrode 1-2 | SFG15 | 0.22 | 21 | 16.2 | 4.1955 | 4.0323 | 0.1632 |
| Example 1-3 | | EC/EMC = 3/7 | Negative electrode 1-3 | SLP50 | 0.64 | 25 | 16.4 | 4.1955 | 4.0223 | 0.1732 |
| Example 1-4 | | EC/EMC = 3/7 | Negative electrode 1-4 | SLP50/SFG15 =85/15 | 0.64 /0.22 | 25/21 | 16.3 | 4.1955 | 4.0278 | 0.1677 |
| Example 1-5 | | Sulfolane / EC / EMC = 2/3/5 | Negative electrode 1-1 | MAGE | 0.09 | 20 | 12.5 | 4.1955 | 4.0314 | 0.1641 |
| Example 1-6 | | Sulfolane / EC/EMC = 5/2/3 | Negative electrode 1-1 | MAGE | 0.09 | 20 | 10.4 | 4.1955 | 4.0304 | 0.1651 |
| Comparative Example 1-1 | | EC/EMC = 3/7 | Negative electrode 1-5 | O-MAC | 0.75 | 31 | 16.2 | 4.1955 | 4.0192 | 0.1763 |
| Comparative Example 1-2 | | EC/EMC = 3/7 | Negative electrode 1-6 | SMG | 1.10 | 45 | 16.1 | 4.1955 | 3.9534 | 0.2421 |
| Comparative Example 1-3 | | Sulfolane | Negative electrode 1-1 | MAGE | 0.09 | 20 | 0.2 | 4.1955 | 4.0311 | 0.1644 |
| Comparative Example 1-4 | | Sulfolane | Negative electrode 1-5 | O-MAC | 0.75 | 31 | 0.2 | 4.1955 | 4.0166 | 0.1789 |
| Comparative Example 1-5 | | Sulfolane / EC / EMC = 6/2/2 | Negative electrode 1-5 | O-MAC | 0.75 | 31 | 3.3 | 4.1955 | 4.0176 | 0.1779 |
| Comparative Example 1-6 | | Sulfolane / EC / EMC = 2/3/5 | Negative electrode 1-5 | O-MAC | 0.75 | 31 | 12.4 | 4.1955 | 4.0183 | 0.1772 |

**[Table 3]**

| Example 1 Series (2) | Electrolyte Salt Composition | Electrolyte Solvent Composition | Negative Electrode | Active Material | Area Ratio D/G ratio | Full-Width at Half-Maximum of G-band (cm⁻¹) | Low-temperature (0°C) Discharge Capacity (mAh) | OCV (V) | | |
|---|---|---|---|---|---|---|---|---|---|---|
| | | | | | | | | Initial (before storage) | After 28 days at 60°C (after storage) | Self-discharge (ΔV) |
| Example 1-7 | 0.2M LiFSl + 1.0M LiPF₆ | EC/EMC = 3/7 | Negative electrode 1-1 | MAGE | 0.09 | 20 | 15.5 | 4.1955 | 4.0534 | 0.1421 |
| Example 1-8 | | Sulfolane / EC / EMC = 2/3/5 | Negative electrode 1-1 | MAGE | 0.09 | 20 | 11.2 | 4.1955 | 4.0525 | 0.1430 |
| Example 1-9 | | Sulfolane / EC / EMC = 5/2/3 | Negative electrode 1-1 | MAGE | 0.09 | 20 | 9.8 | 4.1955 | 4.0489 | 0.1466 |
| Example 1-10 | | EC/EMC = 3/7 | Negative electrode 1-2 | SFG15 | 0.22 | 21 | 15.1 | 4.1955 | 4.0464 | 0.1491 |
| Example 1-11 | | EC/EMC = 3/7 | Negative electrode 1-3 | SLP50 | 0.64 | 25 | 15.4 | 4.1955 | 4.0424 | 0.1531 |
| Example 1-12 | | EC/EMC = 3/7 | Negative electrode 1-4 | SLP50/SFG15 =85/15 | 0.64 /0.22 | 25/21 | 15.2 | 4.1955 | 4.0447 | 0.1508 |
| Comparative Example 1-7 | | EC/EMC = 3/7 | Negative electrode 1-5 | O-MAC | 0.75 | 31 | 15.2 | 4.1955 | 4.0322 | 0.1633 |
| Comparative Example 1-8 | | EC/EMC = 3/7 | Negative electrode 1-6 | SMG | 1.10 | 45 | 15.2 | 4.1955 | 4.0223 | 0.1732 |
| Comparative Example 1-9 | | Sulfolane | Negative electrode 1-1 | MAGE | 0.09 | 20 | 0.1 | 4.1955 | 4.0522 | 0.1433 |
| Comparative Example 1-10 | | Sulfolane | Negative electrode 1-5 | O-MAC | 0.75 | 31 | 0.1 | 4.1955 | 4.0302 | 0.1653 |
| Comparative Example 1-11 | | Sulfolane / EC / EMC = 6/2/2 | Negative electrode 1-5 | O-MAC | 0.75 | 31 | 2.1 | 4.1955 | 4.0311 | 0.1644 |
| Comparative Example 1-12 | | Sulfolane / EC / EMC = 2/3/5 | Negative electrode 1-5 | O-MAC | 0.75 | 31 | 11.0 | 4.1955 | 4.0316 | 0.1639 |

### Discussion of Example 1 Series

. A comparison of batteries differing only in the LiFSI concentration in the non-aqueous electrolytic liquid (for example, Examples 1-1 and 1-7) confirmed that as the concentration of LiFSI increases, the OCV after storage at 60°C for 28 days decreases, self-discharge (ΔV) increases, and self-discharge from a fully charged state is significant.
· Regarding this point, a comparison of batteries differing only in the type of graphite used in the negative electrode (for example, Examples 1-1 to 1-4, Comparative Examples 1-1 and 1-2; Examples 1-7 and 1-10 to 1-12 and Comparative Examples 1-7 and 1-8) confirmed that the batteries that used the specific graphite having a D/G ratio (D/G band area ratio) of 0.7 or less and/or a full-width at half-maximum of the G-band of 28 cm⁻¹ or less (that is, single graphite of MAGE, SFG15, or SLP50, or mixed graphite containing SLP50 and SFG15) exhibited a higher OCV after storage and smaller self-discharge than the batteries that used graphite (O-MAC or SMG) having a D/G ratio and/or a full-width at half-maximum of the G-band outside the above ranges. Accordingly, it was confirmed that self-discharge, which has been a problem of batteries that use an electrolytic liquid containing LiFSI, can be suppressed by using, as the negative electrode active material, graphite having a D/G ratio of 0.7 or less and/or a full-width at half-maximum of the G-band of 28 cm⁻¹ or less.
· In Comparative Examples 1-3, 1-4, 1-9, and 1-10, in which the electrolyte solvents included only sulfolane (a sulfone compound) without containing a carbonate-based solvent, the low-temperature discharge capacity at 0°C was significantly lower compared to that in each of the examples and comparative examples that contained a carbonate-based solvent. This is because sulfolane has a relatively high melting point of 27.5°C, and therefore sulfolane solidifies at a low temperature and thereby causes an increase in viscosity.
· In Comparative Examples 1-5 and 1-11, a heterogeneous mixed solvent containing a carbonate-based solvent and sulfolane was used, and the heterogeneous mixed solvent contained a large amount of sulfolane, for example, 60 mass% or more of sulfolane per 100 mass% of the total amount of the electrolyte solvent, and in these comparative examples, a significant decrease in low-temperature discharge capacity attributable to sulfolane was confirmed as in the case described above.
· On the other hand, in Examples 1-5, 1-6, 1-8, and 1-9 or Comparative Examples 1-6 and 1-12 in which the heterogeneous mixed solvent contained the carbonate-based solvent at an amount of 50 mass% or more per 100 mass% of the total amount of the electrolyte solvent, low-temperature discharge capacity was significantly improved.
· Furthermore, a comparison of batteries (Comparative Examples 1-4 to 1-6 and Comparative Example 1-1, or Comparative Examples 1-10 to 1-12 and Comparative Example 1-7) differing only in the sulfolane content in the electrolyte solvent confirmed that as the sulfolane content is decreased, not only was low-temperature discharge capacity improved, but self-discharge was also suppressed. Accordingly, it was confirmed that both low-temperature characteristics and storage characteristics of the battery were improved by increasing the content of the carbonate-based solvent (50 mass% or more per 100 mass% of the total amount of the electrolyte solvent) in the electrolyte solvent.

### Example 2 Series

### Production of Negative Electrode

Negative electrodes 2-1 to 2-6 were produced with the same compositions as those of the negative electrodes 1-1 to 1-6 by the same method as in Production Examples 1 to 6 with the exception that the coating weight was changed to 10.8 mg/cm².

### Production of Laminated Battery (Examples 2-1 to 2-6 and Comparative Examples 2-1 to 2-6)

· Positive electrodes were produced in the same manner as in the Example 1 series with the exception that the positive electrode active material was changed to LiNi_{0.8}Co_{0.1}Mn_{0.1}O₂ (NCM811) available from Beijing Dangbian Corporation.
· Non-aqueous electrolytic liquids were prepared in the same manner as in the Example 1 series with the exception that the electrolyte solvents were changed to the types and compositions (volumetric ratio) shown in Table 4.
· The obtained positive and negative electrodes were used to produce 30 mAh laminated batteries in the same manner as in the Example 1 series, the batteries were charged and discharged under the above-described conditioning conditions 1, and batteries for evaluation were thereby completed. The types of the negative electrode and electrolytic liquid that were used are described in Table 4 below.

### Evaluation of Laminated Battery

Low-temperature discharge capacity and OCV were measured in the same manner as in the Example 1 series using the batteries for evaluation. The results are shown in Table 4.

**[Table 4]**

| Example 2 Series | Electrolyte Salt Composition | Electrolyte Solvent Composition | Negative Electrode | Active Material | Area Ratio D/G ratio | Full-Width at Half-Maximum of G-band (cm⁻¹) | Low-temperature (0°C) Discharge Capacity (mAh) | OCV (V) | | |
|---|---|---|---|---|---|---|---|---|---|---|
| | | | | | | | | Initial (before storage) | After 28 days at 60°C (after storage) | Self-discharge (ΔV) |
| Example 2-1 | 0.6M LiFSI + 0.6M LiPF₆ | EC/EMC = 3/7 | Negative electrode 2-1 | MAGE | 0.09 | 20 | 18.4 | 4.1955 | 4.0898 | 0.1057 |
| Example 2-2 | | Sulfolane / EC / EMC = 2/3/5 | Negative electrode 2-1 | MAGE | 0.09 | 20 | 11.5 | 4.1955 | 4.0896 | 0.1059 |
| Example 2-3 | | Sulfolane / EC / EMC *= 5*/*2*/*3* | Negative electrode 2-1 | MAGE | 0.09 | 20 | 10.1 | 4.1955 | 4.0874 | 0.1081 |
| Example 2-4 | | EC/EMC = 3/7 | Negative electrode 2-2 | SFG15 | 0.22 | 21 | 17.6 | 4.1955 | 4.0878 | 0.1077 |
| Example 2-5 | | EC/EMC = 3/7 | Negative electrode 2-3 | SLP50 | 0.64 | 25 | 18.1 | 4.1955 | 4.0840 | 0.1115 |
| Example 2-6 | | EC/EMC = 3/7 | Negative electrode 2-4 | SLP50/SFG15 =85/15 | 0.64 /0.22 | 25/21 | 18.2 | 4.1955 | 4.0854 | 0.1101 |
| Comparative Example 2-1 | | EC/EMC = 3/7 | Negative electrode 2-5 | O-MAC | 0.75 | 31 | 18.2 | 4.1955 | 4.0756 | 0.1199 |
| Comparative Example 2-2 | | EC/EMC = 3/7 | Negative electrode 2-6 | SMG | 1.10 | 45 | 18.3 | 4.1955 | 4.0722 | 0.1233 |
| Comparative Example 2-3 | | Sulfolane | Negative electrode 2-1 | MAGE | 0.09 | 20 | 0.2 | 4.1955 | 4.0884 | 0.1071 |
| Comparative Example 2-4 | | Sulfolane | Negative electrode 2-6 | SMG | 1.10 | 45 | 0.2 | 4.1955 | 4.0702 | 0.1253 |
| Comparative Example 2-5 | | Sulfolane / EC / EMC = 6/2/2 | Negative electrode 2-6 | SMG | 1.10 | 45 | 1.9 | 4.1955 | 4.0710 | 0.1245 |
| Comparative Example 2-6 | | Sulfolane / EC / EMC = 2/3/5 | Negative electrode 2-6 | SMG | 1.10 | 45 | 11.3 | 4.1955 | 4.0716 | 0.1239 |

### Discussion of Example 2 Series

· It was confirmed that even when the positive electrode was changed to LiNi_{0.8}Co_{0.1}Mn_{0.1}O₂ (NCM811), the batteries that used a negative electrode containing the specific graphite having a D/G ratio of 0.7 or less and/or a full-width at half-maximum of the G-band of 28 cm⁻¹ or less had a high OCV after storage and could suppress self-discharge.
· Moreover, with respect to the electrolyte solvent, similar to the case of the Example 1 series, a significant decrease in low-temperature discharge capacity attributable to sulfolane was observed, and it was confirmed that when the content of the carbonate-based solvent was increased (to 50 mass% or more), low-temperature discharge capacity was improved and self-discharge was suppressed, that is, both low-temperature characteristics and storage characteristics of the battery were improved.

### Example 3 Series

### Production of Negative Electrode

Negative electrodes 3-1 to 3-6 were produced with the same compositions as those of the negative electrodes 1-1 to 1-6 by the same method as in Production Examples 1 to 6 with the exception that the coating weight was changed to 8.8 mg/cm².

### Production of Laminated Battery (Examples 3-1 to 3-6 and Comparative Examples 3-1 to 3-6)

. The positive electrode active material was changed to a commercially available LiFePO₄, and the LiFePO₄, acetylene black (HS-100), and PVdF (L #7208, available from Kureha Corporation) were weighed at a compositional (mass) ratio of 100:9:6 and dispersed in NMP to prepare a slurry. One side of an aluminum foil was coated (coating weight: 20.20 mg/cm²) with the prepared slurry, dried, and roll-pressed, and thereby a positive electrode was prepared.
· Non-aqueous electrolytic liquids were prepared in the same manner as in the Example 1 series with the exception that the electrolyte solvents were changed to the types and compositions (volumetric ratio) shown in Table 5.
· The obtained positive and negative electrodes were used to produce 25 mAh laminated batteries in the same manner as in the Example 1 series. The types of the negative electrode and the electrolytic liquid that were used are described in Table 5 below.
· After injection of the electrolytic liquid, each battery was charged at a constant current of 5 mA for 3 hours, and then degassed by cleaving one piece and once again vacuum-sealing. After degassing, the batteries were stored at 25°C for 48 hours, and then charged and discharged under conditioning conditions 2 described below, and thereby batteries for evaluation were completed.

### Conditioning Conditions 2

First cycle charging: charge at a constant current of 2.5 mA and a constant voltage of 3.6 V, cut-off at 0.25 mA ⇒ discharging: discharge at 5 mA, cutoff at 2.0 V.
Second cycle charging: charge at a constant current of 2.5 mA and a constant voltage of 3.6 V, cut-off at 0.5 mA ⇒ discharging: discharge at 5 mA, cut-off at 2.0 V.
Third cycle charging: charge at a constant current of 2.5 mA and a constant voltage of 3.6 V, cut-off at 0.5 mA ⇒ discharging: discharge at 25 mA, cut-off at 2.0 V.

### Evaluation of Laminated Battery

The batteries for evaluation were charged and discharged under conditions described below (25°C), and the initial capacity of each was confirmed.
(Conditions) Charging: charge at a constant current of 25 mA and a constant voltage of 3.6 V, cut-off at 0.5 mA ⇒ discharging: cut-off at 2.5 mA and 2.0 V.

### Measurement of Low-Temperature Discharge Capacity (Evaluation of Low-Temperature Characteristics)

A battery for which the initial capacity had been measured was charged at a constant current of 25 mA and a constant voltage of 3.6 V with a cut-off of 0.5 mA, and then soaked at 0°C for 2 hours. Subsequently, the discharge capacity was measured at 0°C with a cut-off at 2.0 V and 25 mA. The results are shown in Table 5.

### Measurement of Self-Discharge Capacity (OCV) (Evaluation of Storage Characteristics)

The OCV was measured in the same manner as in the Example 1 series with the exception that batteries whose initial capacities had been measured were charged to a fully charged state at a constant current of 25 mA and a constant voltage of 3.6V with charging being cut off at 0.5 mA. In addition, batteries for which the OCV was measured after 28 days at 60°C (after storage) were discharged at a constant current of 2.5 mA with discharging being cut off at 2.0 V, and the residual capacity after storage for 28 days at 60°C was then measured. Using the obtained residual capacity and initial capacity, the residual proportion was calculated by the following equation (1).

### [Equation 1]

### (1): Residual proportion (%) = (residual capacity)/(initial capacity) × 100

The results are shown in Table 5. A high residual proportion indicates that the self-discharge capacity is small, and that self-discharge is suppressed.

**[Table 5]**

| Example 3 Series | Electrolyte Salt Composition | Electrolyte Solvent Composition | Negative Electrode | Active Material | Area Ratio D/G ratio | Full-Width at Half-Maximum of G-band (cm⁻¹) | Low-temperature (0°C) Discharge Capacity (mAh) | OCV (V) | | | Capacity |
|---|---|---|---|---|---|---|---|---|---|---|---|
| | | | | | | | | Initial (before storage) | After 28 days at 60°C (after storage) | Self-discharge (ΔV) | Residual proportion (%) |
| Example 3-1 | 0.6M LiFSI + 0.6M LiPF₆ | EC/EMC = 3/7 | Negative electrode 3-1 | MAGE | 0.09 | 20 | 14.2 | 3.3622 | 3.3186 | 0.0436 | 70.4 |
| Example 3-2 | | EC/EMC = 3/7 | Negative electrode 3-2 | SFG15 | 0.22 | 21 | 13.8 | 3.3622 | 3.3182 | 0.0440 | 69.6 |
| Example 3-3 | | EC/EMC = 3/7 | Negative electrode 3-3 | SLP50 | 0.64 | 25 | 14.1 | 3.3622 | 3.3181 | 0.0441 | 68.4 |
| Example 3-4 | | Sulfolane / EC / EMC = *2*/*3*/*5* | Negative electrode 3-3 | SLP50 | 0.64 | 25 | 10.3 | 3.3622 | 3.3179 | 0.0443 | 68.3 |
| Example 3-5 | | Sulfolane / EC / EMC = 5/2/3 | Negative electrode 3-3 | SLP50 | 0.64 | 25 | 8.9 | 3.3622 | 3.3177 | 0.0445 | 68.1 |
| Example 3-6 | | EC/EMC = 3/7 | Negative electrode 3-4 | SLP50/SFG15 =85/15 | 0.64 10.22 | 25/21 | 14.2 | 3.3622 | 3.3182 | 0.0440 | 68.6 |
| Comparative Example 3-1 | | EC/EMC = 3/7 | Negative electrode 3-5 | O-MAC | 0.75 | 31 | 14.1 | 3.3622 | 3.3179 | 0.0443 | 62.5 |
| Comparative Example 3-2 | | EC/EMC = 3/7 | Negative electrode 3-6 | SMG | 1.10 | 45 | 14.2 | 3.3622 | 3.3174 | 0.0448 | 60.4 |
| Comparative Example 3-3 | | Sulfolane | Negative electrode 3-3 | SLP50 | 0.64 | 25 | 0.1 | 3.3622 | 3.3178 | 0.0444 | 68.3 |
| Comparative Example 3-4 | | Sulfolane | Negative electrode 3-6 | SMG | 1.10 | 45 | 0.1 | 3.3622 | 3.3162 | 0.0460 | 60.0 |
| Comparative Example 3-5 | | Sulfolane / EC / EMC = 6/2/2 | Negative electrode 3-6 | SMG | 1.10 | 45 | 1.3 | 3.3622 | 3.3169 | 0.0453 | 60.1 |
| Comparative Example 3-6 | | Sulfolane / EC / EMC = 2/3/5 | Negative electrode 3-6 | SMG | 1.10 | 45 | 10.2 | 3.3622 | 3.3172 | 0.0450 | 60.2 |

### Discussion of Example 3 Series

· It was confirmed that even when the positive electrode was changed to LiFePO₄, the batteries that used a negative electrode containing the specific graphite having a D/G ratio of 0.7 or less and/or a full-width at half-maximum of the G-band of 28 cm⁻¹ or less had a high OCV after storage and could suppress self-discharge.
· Since the discharge voltage of the LiFePO₄ positive electrode is flat, the relationship between OCV and self-discharge (ΔV) may not be clear in some cases. Therefore, when the residual proportion during storage was checked, it was confirmed that the batteries that used a negative electrode containing the specific graphite having a D/G ratio of 0.7 or less and/or a full-width at half-maximum of the G-band of 28 cm⁻¹ or less had a high residual proportion and could suppress self-discharge.
· Moreover, with respect to the electrolyte solvent, similar to the case of the Example 1 series, a significant decrease in low-temperature discharge capacity attributable to sulfolane was observed, and it was confirmed that when the content of the carbonate-based solvent was increased (to 50 mass% or more), low-temperature discharge capacity was improved and self-discharge was suppressed, that is, both low-temperature characteristics and storage characteristics of the battery were improved.

### Example 4 Series

### Synthesis and Analysis of Additives

### ³¹P-NMR Analysis

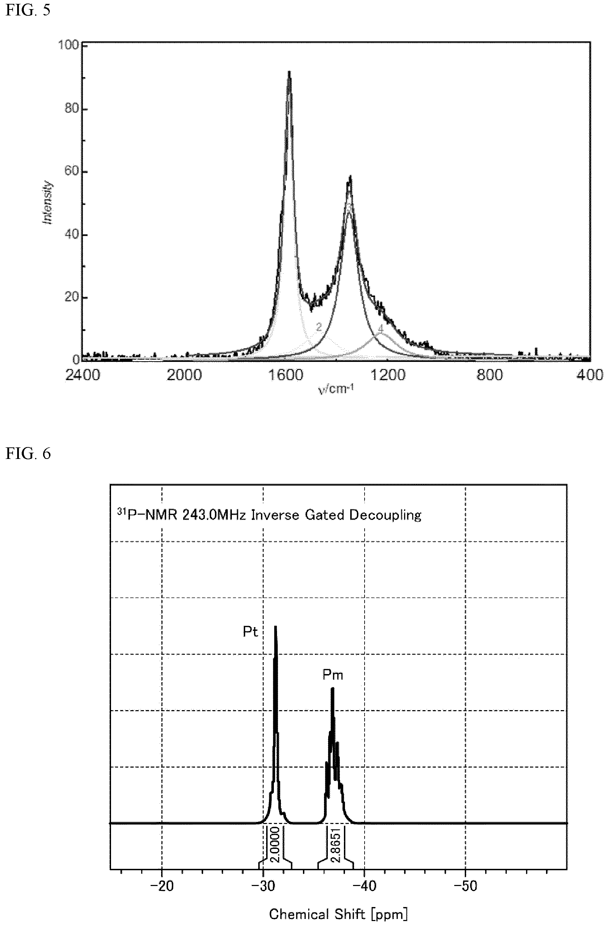

The reagent trimethylsilyl polyphosphate (hereinafter, also referred to as "PPSE-1") available from Sigma-Aldrich was analyzed by ³¹P-NMR, and as illustrated in FIG. 6, two peaks were confirmed including a peak (Pt) appearing at a chemical shift from -28 ppm to -33 ppm and a peak (Pm) appearing at a chemical shift from -35 ppm to -41 ppm. The integral ratio of the two peaks was Pt : Pm = 1.00 : 1.43. Meanwhile, a peak (Pb) appearing at a chemical shift from -41 ppm to -45 ppm was not confirmed. The ³¹P-NMR measurements were performed using the JNM-ECA500 available from JEOL, Ltd. with a double sample tube being used as a sample tube, and the chemical shifts were determined with the peak of the phosphorus of H₃PO₄ added to one tube considered to be 0 ppm.

### Synthesis 1 of Trimethylsilyl Polyphosphate

An amount of 1.553 g of diphosphorus pentoxide was dispersed in 10 mL of methylene chloride, and 1.710 g of hexamethylene disiloxane was slowly added dropwise while stirring, after which the mixture was stirred at room temperature for about one day. Subsequently, the solvent was distilled off to synthesize trimethylsilyl polyphosphate (hereinafter, also referred to as "PPSE-2").

### ³¹P-NMR Analysis

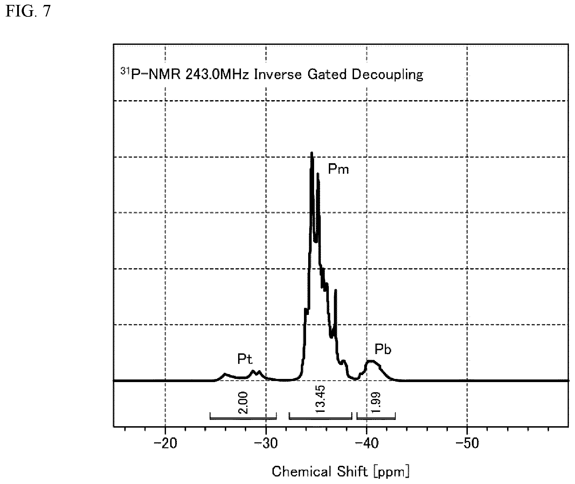

When the synthesized trimethylsilyl polyphosphate (PPSE-2) was analyzed by ³¹P-NMR in the same manner as described above, as illustrated in FIG. 7, three peaks were confirmed including a peak (Pt) appearing at a chemical shift from -28 ppm to -33 ppm, a peak (Pm) appearing at a chemical shift from -35 ppm to -41 ppm, and a peak (Pb) appearing at a chemical shift from -41 ppm to -45 ppm. The integral ratio of the three peaks was Pt : Pm : Pb = 1.00 : 6.73 : 1.00. From the analysis results, it was presumed that PPSE-2 was trimethylsilyl polyphosphate containing a large amount of a branched structure (a branched structure represented by Structural Formula (4-3)).

### Synthesis 2 of Trimethylsilyl Polyphosphate

An amount of 1.553 g of diphosphorus pentoxide was dispersed in 10 mL of toluene, and 1.710 g of hexamethylene disiloxane was slowly added dropwise while stirring, after which the mixture was stirred at room temperature for about one day. Subsequently, the solvent was distilled off to synthesize trimethylsilyl polyphosphate (hereinafter, also referred to as "PPSE-3").

### ³¹P-NMR Analysis

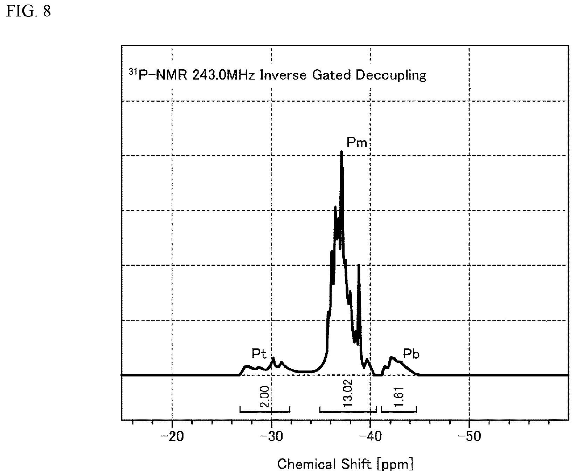

When the synthesized trimethylsilyl polyphosphate (PPSE-3) was analyzed by ³¹P-NMR in the same manner as described above, as illustrated in FIG. 8, three peaks were confirmed including a peak (Pt) appearing at a chemical shift from -28 ppm to -33 ppm, a peak (Pm) appearing at a chemical shift from -35 ppm to -41 ppm, and a peak (Pb) appearing at a chemical shift from -41 ppm to -45 ppm. The integral ratio of the three peaks was Pt : Pm : Pb = 1.00 : 6.51 : 0.81. From the analysis results, it was presumed that PPSE-3 was trimethylsilyl polyphosphate containing a large amount of a branched structure (a branched structure represented by Structural Formula (4-3)).

### Synthesis of Ethyl Polyphosphate

A sample tube was filled with 10 g of diphosphorus pentoxide and, as the solvent, 10 g of chloroform and 20 g and diethyl ether, and the contents were stirred at 900 rpm and 35°C for 3 days. Subsequently, the solvent was distilled off using an evaporator, and vacuum drying was performed for 24 hours, and thereby ethyl polyphosphate (hereinafter, also referred to as "PPE") was synthesized.

### ³¹P-NMR Analysis

When the synthesized ethyl polyphosphate (PPE) was analyzed by ³¹P-NMR in the same manner as described above, three peaks were confirmed including a peak (Pt) appearing at a chemical shift from -12 ppm to -15 ppm, a peak (Pm) appearing at a chemical shift from -25 ppm to -31 ppm, and a peak (Pb) appearing at a chemical shift from -39 ppm to -46 ppm. The integral ratio of the three peaks was Pt : Pm : Pb = 1.00 : 3.59 : 0.42. From the analysis results, it was presumed that PPE was ethyl polyphosphate containing a large amount of a branched structure (a structure in which TMS is an ethyl group in the branched structure represented by Structural Formula (4-3)).

### Synthesis of (Triisopropylsilyl) Polyphosphate

0.53 g of indium(III) bromide was dissolved in 30 mL of tetrahydrofuran, after which 4.75 g of triisopropylsilane was added thereto, and the mixture was stirred and reacted at room temperature for one day. After the reaction, 30 mL of hexane was added to the solution, and the mixture separated into two layers upon standing. The separated upper layer was recovered and then concentrated under reduced pressure, and thereby 4.01 g of hexaisopropyl disiloxane was obtained as a colorless liquid. Subsequently, 1.55 g of phosphorus pentoxide and 1.70 g of the hexaisopropyl disiloxane obtained above were added to 10 mL of dichloromethane, and the mixture was stirred and reacted at 35°C for 3 days. After the reaction, the solution was filtered and then concentrated under reduced pressure, and thereby 2.10 g of (triisopropylsilyl) polyphosphate (hereinafter, also referred to as "PPSE(TIPS)") was synthesized as a viscous liquid.

### Synthesis of [(Tert-butyl) Dimethylsilyl Polyphosphate

[(Tert-butyl) dimethylsilyl] polyphosphate (hereinafter, also referred to as "PPSE(TBDMS)") was synthesized by performing the same procedure as in the synthesis of PPSE(TIPS) with the exception that the triisopropylsilane used in the synthesis of PPSE(TIPS) was changed to tert-butyldimethylsilane.

### Production of Laminated Battery (Examples 4-1 to 4-15 and Comparative Examples 4-1 to 4-8)

· Positive electrodes were produced in the same manner as in the Example 1 series with the exception that the positive electrode active material was changed to LiNi_{0.5}Co_{0.2}Mn_{0.3}O₂ (NCM523) available from Beijing Dangbian Corporation, and the coating weight was changed to 19.5 mg/cm².
· The negative electrode 1-1, 1-2, 1-3, 1-5, or 1-6 produced in the Example 1 series was used.
· Non-aqueous electrolytic liquids were prepared in the same manner as in the Example 1 series with the exception that the electrolyte solvents were changed to the types and compositions (volumetric ratio) shown in Table 6. As necessary, the additive shown in Table 6 was added at the amount shown in Table 6 to the non-aqueous electrolytic liquid obtained as described above, the mixture was stirred for 1 day, and thereby a non-aqueous electrolytic liquid containing an additive was prepared.
· The obtained positive and negative electrodes were used to produce 30 mAh laminated batteries in the same manner as in the Example 1 series. The types of the used negative electrode and electrolyte are described in Table 6 below.
· After injection of the electrolytic liquid, the batteries were vacuum-sealed and subjected to charging at a constant current of 3 mA for 3 hours at 25°C. Subsequently, the batteries were allowed to stand at room temperature for 2 days, and then degassed by cleaving one piece of the laminate package and then once again vacuum-sealing. After degassing, the batteries were charged and discharged under conditioning conditions 3 described below, and thereby batteries for evaluation were completed.

### Conditioning Conditions 3

First cycle charging: charge at a constant current of 3 mA and a constant voltage of 4.2 V, cut-off at 0.3 mA ⇒ discharging: discharge at 6 mA, cut-off at 2.75 V.
Second cycle charging: charge at a constant current of 15 mA and a constant voltage of 4.2 V, cut-off at 0.6 mA ⇒ discharging: discharge at 6 mA, cut-off at 2.75 V.
Third cycle charging: charge at a constant current of 15 mA and a constant voltage of 4.2 V, cut-off at 0.6 mA ⇒ discharging: discharge at 30 mA, cut-off at 2.75 V.
Fourth cycle charging: charge at a constant current of 15 mA and a constant voltage of 4.2 V, cut-off at 0.6 mA ⇒ discharging: discharge at 60 mA, cut-off at 2.75 V.

### Evaluation of Laminated Battery

### Measurement of Self-Discharge Capacity (OCV) (Evaluation of Storage Characteristics)

The conditioned batteries were charged to a fully charged state at a constant current of 30 mA (1 C) and a constant voltage of 4.2 V with a cut-off of 0.6 mA using a charge/discharge tester. OCV was measured in the same manner as in the Example 1 series with the exception that after being fully charged, the batteries were each stored at 80°C for 14 days and then left standing (stored) at 25°C for 6 hours or longer. The results are shown in Table 6.

### Detected Amount of Transition Metal

After the OCV measurement, the batteries were discharged and then disassembled, and the removed PE separators and the negative electrodes were washed with 50 mL of EMC and then dried. Subsequently, the negative electrode composite material (negative electrode active material) detached from the current collector (copper-foil) was immersed in 1 g of nitric acid for 24 hours and dissolved. Next, the PE separator was also immersed in the nitric acid for 24 hours. The obtained nitric acid solution was filtered and diluted with ultrapure water to prepare a test sample. The amount of nickel (Ni), the amount of cobalt (Co), and the amount of manganese (Mn) (per battery (cell)) in the test sample were detected by analyzing the test sample with an ICP emission spectrometer (available from Shimadzu Corporation). The results are shown in Table 6.

**[Table 6]**

| Example 4 Series | Electrolytic Liquid | Additive | Negative Electrode | Active Material | Area Ratio D/G ratio | Full-Width at Half-Maximum of G-band (cm⁻¹) | OCV (V) | | | Detected Ni Amount (µg/cell) | Detected Co Amount (µg/cell) | Detected Mn Amount (µg/cell) |
|---|---|---|---|---|---|---|---|---|---|---|---|---|
| | | | | | | | Initial (before storage) | After 14 days at 80°C (after storage) | Self-discharge (ΔV) | | | |
| Example 4-1 | (Electrolyte salt composition) 0.6 M LiPFSI + 0.6 M LiPF₆ (Electrolyte solvent composition) EC/EMC = 3/7 | - | Negative electrode 1-1 | MAGE | 0.09 | 20 | 4.1955 | 4.0173 | 0.1782 | 46.4 | 15.3 | 20.4 |
| Example 4-2 | | PPSE-1 0.5% | | | | | 4.1955 | 4.0388 | 0.1567 | 13.2 | 10.3 | 14.3 |
| Example 4-3 | | PPSE-2 0.5% | | | | | 4.1955 | 4.0454 | 0.1501 | 12.2 | 9.4 | 10.4 |
| Example 4-4 | | PPSE-3 0.5% | | | | | 4.1955 | 4.0450 | 0.1505 | 12.9 | 9.2 | 10.2 |
| Example 4-5 | | PPE 0.5% | | | | | 4.1955 | 4.0436 | 0.1519 | 14.6 | 10.5 | 12.2 |
| Example 4-6 | | PPSE(TIPS) 0.5% | | | | | 4.1955 | 4.0461 | 0.1494 | 14.8 | 10.4 | 13.3 |
| Example 4-7 | | PPSE(TBDMS) 0.5% | | | | | 4.1955 | 4.0433 | 0.1522 | 14.8 | 10.4 | 13.6 |
| Example 4-8 | | - | Negative electrode 1-2 | SFG15 | 0.22 | 21 | 4.1955 | 4.0168 | 0.1787 | 43.4 | 14.7 | 21.4 |
| Example 4-9 | | PPSE-2 0.3% | | | | | 4.1955 | 4.0445 | 0.1510 | 16.0 | 11.2 | 14.7 |
| Example 4-10 | | PPSE-2 1.0% | | | | | 4.1955 | 4.0480 | 0.1475 | 11.5 | 9.4 | 11.4 |
| Example 4-11 | | PPE 1.0% | | | | | 4.1955 | 4.0431 | 0.1524 | 12.3 | 9.5 | 10.6 |
| Example 4-12 | | PPSE(TBDMS) 1.0% | | | | | 4.1955 | 4.0447 | 0.1508 | 12.9 | 9.3 | 11.6 |
| Example 4-13 | | - | Negative electrode 1-3 | SLP50 | 0.64 | 25 | 4.1955 | 4.0154 | 0.1801 | 47.2 | 15.2 | 21.4 |
| Example 4-14 | | PPSE-3 1.0% | | | | | 4.1955 | 4.0425 | 0.1530 | 17.3 | 9.6 | 10.8 |
| Example 4-15 | | PPSE(TIPS) 1.0% | | | | | 4.1955 | 4.0422 | 0.1533 | 18.5 | 9.6 | 11.1 |
| Comparative Example 4-1 | | - | Negative electrode 1-5 | O-MAC | 0.75 | 31 | 4.1955 | 4.0142 | 0.1813 | 59.8 | 19.4 | 24.8 |
| Comparative Example 4-2 | | PPSE-1 0.5% | | | | | 4.1955 | 4.0245 | 0.1710 | 35.2 | 14.4 | 15.7 |
| Comparative Example 4-3 | | PPE 0.5% | | | | | 4.1955 | 4.0234 | 0.1721 | 36.4 | 14.6 | 15.2 |
| Comparative Example 4-4 | | PPSE(TBDMS) 0.5% | | | | | 4.1955 | 4.0238 | 0.1717 | 36.3 | 13.6 | 14.8 |
| Comparative Example 4-5 | | - | Negative electrode 1-6 | SMG | 1.1 | 45 | 4.1955 | 4.0131 | 0.1824 | 63.3 | 20.2 | 25.9 |
| Comparative Example 4-6 | | PPSE-2 0.5% | | | | | 4.1955 | 4.0221 | 0.1734 | 37.1 | 14.8 | 16.9 |
| Comparative Example 4-7 | | PPSE-3 0.5% | | | | | 4.1955 | 4.0213 | 0.1742 | 36.2 | 15.1 | 16.2 |
| Comparative Example 4-8 | | PPSE(TIPS) 0.5% | | | | | 4.1955 | 4.0205 | 0.1750 | 36.8 | 14.6 | 17.2 |

### Discussion of Example 4 Series

· In the case in which LiNi_{0.5}Co_{0.2}Mn_{0.3}O₂ (NCM523) was used as the positive electrode, it was confirmed that the batteries that used a negative electrode containing the specific graphite having a D/G ratio of 0.7 or less (or a full-width at half-maximum of the G-band of 28 cm⁻¹ or less) all exhibited a relatively high OCV after storage at 80°C for 14 days and suppressed self-discharge (ΔV) during storage, as compared with the batteries that used a negative electrode containing graphite having a D/G ratio (or a full-width at half-maximum of the G-band) outside the above range (batteries differing only in the negative electrode).
· In addition, in the batteries that used a negative electrode containing the specific graphite, the detected Ni amount, the detected Co amount, and the detected Mn amount were all reduced as compared with the batteries that used a negative electrode containing graphite other than the specific graphite, and thus it was confirmed that the elution of Ni, Co, and Mn from the positive electrode was suppressed. From this result, it was presumed that self-discharge was suppressed by reducing the side reaction that caused the elution of transition metals from the positive electrode.
· It was also confirmed that when trimethylsilyl polyphosphate (PPSE-1) was added to the electrolytic liquid, the elution amounts of Ni, Co, and Mn were significantly reduced, and in association therewith, self-discharge during storage at 80°C for 14 days was also further suppressed. It was also confirmed that the above-described reduction and suppression effects due to the addition of PPSE-1 were higher (that is, the elution amount of Ni, Co, and Mn was more effectively reduced, and self-discharge was better suppressed) in the batteries that used a negative electrode containing the specific graphite described above in comparison to the batteries that used a negative electrode containing graphite other than the specific graphite.
· Even in a case in which a trimethylsilyl polyphosphate (PPSE-2, PPSE-3) containing a large amount of branched structures was used, the same tendency as that of the commercially available trimethylsilyl polyphosphate (PPSE-1) was exhibited. In other words, it was confirmed that by adding PPSE-2 or PPSE-3 to the electrolytic liquid, the amount of Ni elution was reduced, and in association therewith, self-discharge during storage at 80°C for 14 days was suppressed. Although the reasons for the following are unclear, it was confirmed that PPSE-2 and PPSE-3 having a peak (Pb) indicating a branched structure had a smaller detected amount of Ni than the PPSE-1 having no Pb peak, and Ni elution from the positive electrode was further suppressed. It is presumed that self-discharge was improved as a result.
· Even when ethyl polyphosphate (PPE) containing a large amount of branched structures was used, the same tendency as that of trimethylsilyl polyphosphate (PPSE-1) was exhibited. In other words, it was confirmed that by adding PPE to the electrolytic liquid, the amount of Ni elution was reduced, and in association therewith, self-discharge during storage at 80°C for 14 days was suppressed.
· Even when (triisopropylsilyl) polyphosphate [PPSE(TIPS)] or [(tert-butyl)dimethylsilyl] polyphosphate (PPSE(TBDMS)) was used, the same tendency as that of trimethylsilyl polyphosphate (PPSE-1) was exhibited. In other words, it was confirmed that by adding PPSE(TIPS) or PPSE(TBDMS) to the electrolytic liquid, the amount of Ni elution was reduced, and in association therewith, self-discharge during storage at 80°C for 14 days was suppressed.

### Example 5 Series

### Production of Laminated Battery (Examples 5-1 to 5-15 and Comparative Examples 5-1 to 5-8)

· Positive electrodes were produced in the same manner as in the Example 1 series with the exception that the positive electrode active material was changed to LiNi_{0.8}Co_{0.1}Mn_{0.1}O₂ (NCM811) available from Beijing Dangbian Corporation, and the coating weight was changed to 15.7 mg/cm².
· The negative electrode 1-1, 1-2, 1-3, 1-5, or 1-6 produced in the Example 1 series was used.
· Non-aqueous electrolytic liquids were prepared in the same manner as in the Example 4 series with the exception that the electrolyte solvents were changed to the types and compositions (volumetric ratio) shown in Table 7.
· The obtained positive and negative electrodes were used to complete a battery for evaluation in the same manner as in the Example 4 series. The types of the used negative electrode and electrolyte are described in Table 7 below.

### Evaluation of Laminated Battery

The batteries for evaluation were evaluated in the same manner as in the Example 4 series. The results are shown in Table 7 below.

**Table 7**

| Example 5 Series | Electrolytic Liquid | Additive | Negative Electrode | Active Material | Area Ratio D/G ratio | Full-Width at Half-Maximum of G-band (cm⁻¹) | OCV (V) | | | Detected Ni Amount (µg/cell) | Detected Co Amount (µg/cell) | Detected Mn Amount (µg/cell) |
|---|---|---|---|---|---|---|---|---|---|---|---|---|
| | | | | | | | Initial (Before storage) | 80°C After 14 days (After storage) | Self-Discharge (ΔV) | | | |
| Example 4-1 | (Electrolyte salt composition) 0.6 M LiFSI + 0.6 M LiPF₆ (Electrolyte solvent composition) LC/EMC = 3/7 | - | Negative electrode 1-1 | MAGE | 0.09 | 20 | 4.1955 | 4.0102 | 0.1853 | 69.9 | 9.2 | 10.2 |
| Example 4-2 | | PPSE-1 0.5% | | | | | 4.1955 | 4.0324 | 0.1631 | 21.1 | 6.1 | 7.1 |
| Example 4-3 | | PPSE-2 0.5% | | | | | 4.1955 | 4.0388 | 0.1567 | 19.6 | 5.5 | 5.5 |
| Example 4-4 | | PPSE-3 0.5% | | | | | 4.1955 | 4.0380 | 0.1575 | 20.2 | 5.2 | 5.5 |
| Example 4-5 | | PPE 0.5% | | | | | 4.1955 | 4.0366 | 0.1589 | 22.4 | 6.4 | 6.9 |
| Example 4-6 | | PPSE(TIPS) 0.5% | | | | | 4.1955 | 4.0391 | 0.1564 | 22.8 | 5.8 | 6.6 |
| Example 4-7 | | PPSE(TBDMS) 0.5% | | | | | 4.1955 | 4.0372 | 0.1583 | 22.8 | 6.2 | 6.6 |
| Example 4-8 | | - | Negative electrode 1-2 | SFG15 | 0.22 | 21 | 4.1955 | 4.0107 | 0.1848 | 65.0 | 8.8 | 10.1 |
| Example 4-9 | | PPSE-2 0.3% | | | | | 4.1955 | 4.0377 | 0.1578 | 24.7 | 7.2 | 7.7 |
| Example 4-10 | | PPSE-2 1.0% | | | | | 4.1955 | 4.0400 | 0.1555 | 18.8 | 6.2 | 6.2 |
| Example 4-11 | | PPE 1.0% | | | | | 4.1955 | 4.0372 | 0.1583 | 20.1 | 6.4 | 6.6 |
| Example 4-12 | | PPSE(TBDMS) 1.0% | | | | | 4.1955 | 4.0381 | 0.1574 | 19.8 | 6.6 | 6.6 |
| Example 4-13 | | - | Negative electrode 1-3 | SLP50 | 0.64 | 25 | 4.1955 | 4.0094 | 0.1861 | 71.8 | 10.1 | 11.2 |
| Example 4-14 | | PPSE-3 1.0% | | | | | 4.1955 | 4.0355 | 0.1600 | 26.8 | 7.2 | 7.7 |
| Example 4-15 | | PPSE(TIPS) 1.0% | | | | | 4.1955 | 4.0355 | 0.1600 | 28.8 | 7.2 | 7.2 |
| Comparative Example 4-1 | | - | Negative electrode 1-5 | O-MAC | 0.75 | 31 | 4.1955 | 4.0071 | 0.1884 | 89.8 | 15.4 | 15.5 |
| Comparative Example 4-2 | | PPSE-1 0.5% | | | | | 4.1955 | 4.0177 | 0.1778 | 54.3 | 13.3 | 12.8 |
| Comparative Example 4-3 | | PPE 0.5% | | | | | 4.1955 | 4.0166 | 0.1789 | 55.7 | 12.6 | 12.8 |
| Comparative Example 4-4 | | PPSE(TBDMS) 0.5% | | | | | 4.1955 | 4.0168 | 0.1787 | 56.2 | 12.8 | 12.4 |
| Comparative Example 4-5 | | - | Negative electrode 1-6 | SMG | 1.1 | 45 | 4.1955 | 4.0062 | 0.1893 | 94.4 | 15.6 | 16.2 |
| Comparative Example 4-6 | | PPSE-2 0.5% | | | | | 4.1955 | 4.0146 | 0.1809 | 57.2 | 8.8 | 9.2 |
| Comparative Example 4-7 | | PPSE-3 0.5% | | | | | 4.1955 | 4.0143 | 0.1812 | 55.4 | 9.1 | 8.8 |
| Comparative Example 4-8 | | PPSE(TIPS) 0.5% | | | | | 4.1955 | 4.0137 | 0.1818 | 56.6 | 8.4 | 9.1 |

### Discussion of Example 5 Series

· The same trends as those of the Example 4 series were exhibited even when the positive electrode was changed to LiNi_{0.8}Co_{0.1}Mn_{0.1}O₂ (NCM811). In other words, in the case in which NCM811 was used as the positive electrode, it was confirmed that the batteries that used a negative electrode containing the specific graphite having a D/G ratio of 0.7 or less (or a full-width at half-maximum of the G-band of 28 cm⁻¹ or less) all exhibited a relatively high OCV after storage at 80°C for 14 days and suppressed self-discharge (ΔV) during storage, as compared with the batteries that used a negative electrode containing graphite having a D/G ratio (or a full-width at half-maximum of the G-band) outside the above range (batteries differing only in the negative electrode). However, when compared with the self-discharge during storage at 60°C for 28 days of the Example 2 series using the same NCM811, the suppression effect thereof was small. The reason for this was presumed to be promoted elution of the transition metals (Ni, Co, and Mn) from the positive electrode as a side reaction when the battery was stored in a high-load, hightemperature environment.
· In addition, similarly to the Example 4 series, in the batteries that used a negative electrode containing the specific graphite, the detected amount of Ni was reduced as compared with the batteries that used a negative electrode containing graphite other than the specific graphite, and thus it was confirmed that the elution of Ni from the positive electrode was suppressed. From this result, it was presumed that self-discharge was suppressed by the reduction of the side reaction.
· Even when the positive electrode was changed to NCM811, it was confirmed that similar to the Example 4 series, the addition of trimethylsilyl polyphosphate (PPSE-1), trimethylsilyl polyphosphate (PPSE-2, PPSE-3) containing a large number of branched structures, ethyl polyphosphate (PPE) containing a large number of branched structures, (triisopropylsilyl) polyphosphate [PPSE (TIPS)] or [(tert-butyl) dimethylsilyl] polyphosphate (PPSE (TBDMS)) to the electrolytic liquid reduced the eluted amount of Ni, and in association therewith, self-discharge during storage at 80°C for 14 days was suppressed.
· Moreover, similar to the Example 4 series, it was confirmed that PPSE-2 and PPSE-3 having a peak (Pb) indicating a branched structure resulted in a smaller detected amount of Ni than the PPSE-1 having no Pb peak, and Ni elution from the positive electrode was further suppressed. It was presumed that self-discharge was improved as a result.

## Claims

1. A non-aqueous electrolyte secondary battery comprising:
a non-aqueous electrolytic liquid containing a sulfonylimide compound represented by General Formula (1) as an electrolyte salt and a carbonate-based solvent as an electrolyte solvent;
a negative electrode containing, as a negative electrode active material, graphite having a peak area ratio (D/G ratio) of a D-band and a G-band analyzed by Raman spectroscopy of 0.7 or less; and
a positive electrode:
LiN(RSO₂)(FSO₂) (1)
where R represents a fluorine atom, an alkyl group having 1-6 carbon atoms, or a fluoroalkyl group having 1-6 carbon atoms.

2. A non-aqueous electrolyte secondary battery comprising:
a non-aqueous electrolytic liquid containing a sulfonylimide compound represented by General Formula (1) as an electrolyte salt and a carbonate-based solvent as an electrolyte solvent;
a negative electrode containing, as a negative electrode active material, graphite having a full-width at half-maximum of the G-band analyzed by Raman spectroscopy of 28 cm⁻¹ or less; and
a positive electrode:
LiN(RSO₂)(FSO₂) (1)
where R represents a fluorine atom, an alkyl group having 1-6 carbon atoms, or a fluoroalkyl group having 1-6 carbon atoms.

3. The non-aqueous electrolyte secondary battery according to claim 1 or 2, wherein the sulfonylimide compound represented by General Formula (1) is contained at an amount of 0.2 mol/L or more relative to the non-aqueous electrolytic liquid.

4. The non-aqueous electrolyte secondary battery according to any one of claims 1 to 3, wherein the sulfonylimide compound represented by General Formula (1) includes LiN(FSO₂)₂.

5. The non-aqueous electrolyte secondary battery according to any one of claims 1 to 4, wherein the carbonate-based solvent is contained at an amount of 50 mass% or more per 100 mass% of the total amount of the electrolyte solvent.

6. The non-aqueous electrolyte secondary battery according to any one of claims 1 to 5, wherein the carbonate-based solvent includes at least one selected from the group consisting of a chain carbonate-based solvent and a saturated cyclic carbonate-based solvent.

7. The non-aqueous electrolyte secondary battery according to any one of claims 1 to 6, wherein the non-aqueous electrolytic liquid contains, as an additive, a phosphorus atom-containing compound represented by General Formula (4):
[-P(=O)(OR¹)O-]ₙ (4)
where R¹ represents an alkyl group having 1-6 carbon atoms (with an optional substituent), a fluoroalkyl group having 1-6 carbon atoms (with an optional substituent), an aryl group (with an optional substituent), a silyl group with an optional substituent), an alkali metal atom, an onium salt, or a hydrogen atom, and n is 2 or greater.

8. The non-aqueous electrolyte secondary battery according to any one of claims 1 to 6, wherein the non-aqueous electrolytic liquid contains, as an additive, at least one selected from the group consisting of trimethylsilyl polyphosphate, ethyl polyphosphate, (triisopropylsilyl) polyphosphate, and [(tert-butyl) dimethylsilyl] polyphosphate.

9. The non-aqueous electrolyte secondary battery according to any one of claims 1 to 8, wherein the positive electrode contains a positive electrode active material represented by General Formula (5):
LiᵥNiₓCo_{y}Mn_{z}O_{2+w} (5)
where 0.2 ≤ v ≤ 1.2, 0.5 ≤ x ≤ 0.9, 0 < y ≤ 0.3, 0 < z ≤ 0.4, x + y + z = 1, -0.2 ≤ w ≤ 0.2,
where v represents a molar ratio of Li, x represents a molar ratio of Ni, y represents a molar ratio of Co, z represents a molar ratio of Mn, and w (2 + w) represents a molar ratio of O.

10. The non-aqueous electrolyte secondary battery according to any one of claims 1 to 9, wherein the electrolyte salt includes at least one selected from the group consisting of a compound represented by General Formula (2), a compound represented by General Formula (3), and LiAsF₆;
LiPFₐ(CₘF₂ₘ₊₁)₆₋ₐ (2)
where a: 0 ≤ a ≤ 6, m: 1 ≤ m ≤ 4,
LiBF₆(CₙF₂ₙ₊₁)_{4-b} (3)
where b: 0 ≤ b ≤ 4, n: 1 ≤ n ≤ 4.
